# EUROPEAN PATENT APPLICATION

(11) **EP 4 757 417 A1**
(43) Date of publication of application: **10.06.2026**
(21) Application number: 24855788.6
(22) Date of filing: 20.08.2024
(51) Int. Cl.: H04W 36/08

(54) **ACCESS HANDOVER METHOD AND APPARATUS**

(30) Priority: 21.08.2023 CN 202311058296
(71) Applicant: HUAWEI TECHNOLOGIES CO., LTD., Shenzhen 518129 (CN)
(72) Inventor: ZHANG, Jingwei, Shenzhen, Guangdong 518129 (CN); CHEN, Ying, Shenzhen, Guangdong 518129 (CN); QIAO, Yunfei, Shenzhen, Guangdong 518129 (CN); WANG, Yu, Shenzhen, Guangdong 518129 (CN); ZHANG, Jiayin, Shenzhen, Guangdong 518129 (CN)
(74) Representative: Gill Jennings & Every LLP
(86) International application number: PCT/CN2024/113223
(87) International publication number: WO 2025/040065

(57) **Abstract**

This application provides an access switch method and an apparatus. The method may be applied to a terminal device. The method includes: The terminal device receives first information, where the first information indicates acknowledgment information that a first network device configures an uplink grant for the terminal device, and the first network device is a target network device to which the terminal device is to perform access switch; the terminal device determines a first uplink grant configured by the first network device for the terminal device; and the terminal device switches to the first network device based on the first uplink grant. The first uplink grant includes a first time domain resource, the first time domain resource is in a first time period, and the first time period is a time period in which the terminal device switches to the first network device. In this way, the first time domain resource occupies short time, and a waste of resources caused in a process in which the terminal device switches to the first network device can be reduced.

## Description

This application claims priority to Chinese Patent Application No. 202311058296.8, filed with the China National Intellectual Property Administration on August 21, 2023 and entitled "ACCESS SWITCH METHOD AND APPARATUS", which is incorporated herein by reference in its entirety.

### TECHNICAL FIELD

This application relates to the field of communication technologies, and in particular, to an access switch method and an apparatus.

### BACKGROUND

In a terrestrial network, when a terminal device detects that signal quality of a current cell deteriorates or signal quality of a neighboring cell improves, the terminal device reports a signal quality measurement report to a network device currently connected to the terminal device. After receiving the measurement report, the network device selects a target cell for the terminal device, and notifies the terminal device of the target cell. In this case, the terminal device performs switch between the target cell and the current cell.

However, in a non-terrestrial network, a satellite is far away from the ground, and round-trip transmission time of a signal may usually reach several milliseconds or even tens of milliseconds. If the terminal device still performs cell switch by using a cell switch method in the terrestrial network, a large switch delay is caused.

Therefore, how the terminal device in the non-terrestrial network perform switch is still an urgent problem to be resolved currently.

### SUMMARY

Embodiments of this application provide an access switch method and an apparatus, to reduce a waste of resources in an access switch process of a terminal device.

According to a first aspect, an embodiment of this application provides an access switch method. The method may be performed by a terminal device. The terminal device herein may be the terminal device itself, or may be a processor, a module, a chip, a chip system, or the like that is in the terminal device and that implements the method. In the method, the terminal device receives first information, where the first information indicates acknowledgment information that a first network device configures an uplink grant for the terminal device. The first network device is a target network device to which the terminal device is to perform access switch, a first uplink grant includes a first time domain resource, the first time domain resource is in a first time period, and the first time period is a time period in which the terminal device switches to the first network device. The terminal device determines, based on the first information, the first uplink grant configured by the first network device for the terminal device. The terminal device switches to the first network device based on the first uplink grant.

In this embodiment of this application, the first time domain resource in the first uplink grant used when the terminal device switches to the first network device is in the first time period, and the first time period is the time period in which the terminal device switches to the first network device. In this way, the first time domain resource occupies short time, and a waste of resources caused when the terminal device switches to the first network device can be reduced.

In addition, before switching to the first network device, the terminal device determines the first uplink grant configured by the first network device for the terminal device. In this way, when the terminal device needs to switch to the first network device, the terminal device may directly switch to the first network device based on the determined first uplink grant, to reduce a switching delay of the terminal device.

In an optional implementation, that the terminal device switches to the first network device based on the first uplink grant includes: receiving a cell switch command from a second network device, and sending uplink data to the first network device based on the first uplink grant, to access the first network device, where the second network device is a network device that currently serves the terminal device. In other words, the terminal device switches to the first network device based on the determined first uplink grant, to maintain communication continuity.

In an optional implementation, in a manner in which the terminal device receives the cell switch command and switches to the first network device, before the terminal device switches to the first network device based on the first uplink grant, the terminal device may further receive a first indication, where the first indication indicates that the first network device has activated the first uplink grant. In other words, the terminal device may further determine, based on the received first indication, that the first uplink grant has been activated, so that when receiving the cell switch command, the terminal device switches to the first network device based on the first uplink grant that is configured by the first network device for the terminal device and that has been activated.

In another optional implementation, that the terminal device switches to the first network device based on the first uplink grant includes: sending second information when a first condition is met, where the second information is used to request to activate the first uplink grant configured by the first network device for the terminal device, the first condition is that signal quality corresponding to the first network device is higher than signal quality corresponding to the second network device by a first threshold, and the second network device is a network device that currently serves the terminal device; receiving third information, where the third information indicates that the first network device has activated the first uplink grant; and when a second condition is met, sending uplink data to the first network device based on the first uplink grant, to access the first network device, where the second condition is that the signal quality corresponding to the first network device is higher than the signal quality corresponding to the second network device by a second threshold.

When the signal quality corresponding to the first network device is higher than the signal quality corresponding to the second network device by the first threshold, the terminal device determines that the terminal device may switch to the first network device. In this case, the terminal device sends the second information, to request to activate the first uplink grant configured by the first network device for the terminal device. In this way, the terminal device learns, by receiving the third information, that the first uplink grant has been activated by the first network device. Further, when the signal quality corresponding to the first network device is higher than the signal quality corresponding to the second network device by the second threshold, that is, when determining that the terminal device needs to switch to the first network device, the terminal device switches to the first network device based on the first uplink grant that is configured by the first network device for the terminal device and that has been activated, to maintain communication continuity.

In still another optional implementation, that the terminal device switches to the first network device based on the first uplink grant includes: sending second information when a first condition is met, where the second information is used to request to activate the first uplink grant configured by the first network device for the terminal device, the first condition is that signal quality corresponding to the first network device is higher than signal quality corresponding to the second network device by a first threshold, and the second network device is a network device that currently serves the terminal device; receiving third information, where the third information indicates that the first network device has activated the first uplink grant; and when receiving a cell switch command from the second network device, sending uplink data to the first network device based on the first uplink grant, to access the first network device.

It can be learned that after the terminal device learns, by using the second information and the third information, that the first uplink grant configured by the first network device for the terminal device has been activated, the terminal device determines, based on whether the cell switch command from the second network device is received, whether to switch to the first network device.

In an optional implementation, the terminal device receives the first threshold and the second threshold that correspond to the first network device, or receives the first threshold corresponding to the first network device. This manner helps the terminal device perform conditional handover-based random access channel-less to the first network device based on the first condition and the second condition or based on the first condition.

In an optional implementation, the first information further indicates the first uplink grant.

In another optional implementation, that the terminal device determines the first uplink grant configured by the first network device for the terminal device includes: receiving the fourth information, where the fourth information indicates the first uplink grant; and determining, based on the fourth information, the first uplink grant configured by the first network device for the terminal device.

It can be learned that the terminal device can learn, by using the first information, of the first uplink grant configured by the first network device for the terminal device, or determine, by using the fourth information, the first uplink grant configured by the first network device for the terminal device.

In an optional implementation, a start moment of the first time period is a moment at which the terminal device sends a measurement report to a second network device, and an end moment of the first time period is a moment at which the terminal device accesses the first network device.

According to a second aspect, an embodiment of this application further provides an access switch method. The method may be applied to a third network device. The third network device herein may be the third network device itself, or may be a processor, a module, a chip, a chip system, or the like that is in the third network device and that implements the method. In the method, the third network device sends fifth information to a first network device, where the fifth information is used to request the first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch. The third network device receives first information from the first network device, and sends the first information, where the first information indicates acknowledgment information that the first network device configures the uplink grant for the terminal device.

In this embodiment of this application, the third network device requests, by using the fifth information, the first network device to configure the uplink grant for the terminal device, the fifth information includes the information indicating the first time period, the time domain resource in the uplink grant is in the first time period, and the first time period is the time period in which the terminal device switches to the first network device. In this way, the time domain resource in the uplink grant configured by the first network device for the terminal device based on the first time period occupies short time, so that a waste of resources can be reduced.

In an optional implementation, the first information further indicates a first uplink grant configured by the first network device for the terminal device. This manner helps the terminal device obtain the first uplink grant based on the first information.

In an optional implementation, after receiving the first information from the first network device and sending the first information, the third network device receives second information, and sends the second information to the first network device, where the second information is used to request to activate the first uplink grant configured by the first network device for the terminal device. The third network device receives third information from the first network device, and sends the third information, where the third information indicates that the first network device has activated the first uplink grant.

In an optional implementation, the third network device sends the first threshold and the second threshold that correspond to the first network device, or sends the first threshold corresponding to the first network device.

In an optional implementation, a start moment of the first time period is a moment at which the terminal device sends a measurement report to a second network device, and an end moment of the first time period is a moment at which the terminal device accesses the first network device.

According to a third aspect, an embodiment of this application further provides an access switch method. The method may be applied to a first network device. The first network device herein may be the first network device itself, or may be a processor, a module, a chip, a chip system, or the like that is in the first network device and that implements the method. In the method, the first network device receives fifth information to a third network device, where the fifth information is used to request the first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch. The first network device sends first information to the third network device, where the first information indicates acknowledgment information that the first network device configures the uplink grant for the terminal device. The first network device receiving uplink data from the terminal device based on a first uplink grant configured for the terminal device, where the first uplink grant includes a first time domain resource, and the first time domain resource is in the first time period.

In this embodiment of this application, the first network device receives the fifth information used to request to configure the uplink grant for the terminal device, and indicates, by using the first information, the acknowledgment information that the first network device configures the uplink grant for the terminal device. The fifth information includes the information indicating the first time period, the time domain resource in the uplink grant is in the first time period, and the first time period is the time period in which the terminal device switches to the first network device. In this way, the first time domain resource included in the first uplink grant configured by the first network device for the terminal device is determined based on the first time period and is in the first time period. Therefore, the first time domain resource occupies short time, so that a waste of resources can be reduced.

In an optional implementation, the first information further indicates the first uplink grant. This manner can reduce signaling overheads.

In an optional implementation, before receiving the uplink data from the terminal device based on the first uplink grant configured for the terminal device, the first network device sends fourth information at a first moment, where the fourth information indicates the first uplink grant, and the first moment is later than or equal to a start moment of the first time period. It can be learned that the first network device may alternatively indicate, by using the fourth information different from the first information, the first uplink grant configured for the terminal device.

In an optional implementation, before receiving the uplink data from the terminal device based on the first uplink grant configured for the terminal device, the first network device sends a first indication when a third condition is met, where the first indication indicates that the first network device has activated the first uplink grant. The third condition is that current time is in the first time period; or the third condition is that a distance between the terminal device and the first network device is less than or equal to a first preset value, and/or a distance between the terminal device and a second network device is greater than a second preset value, where the second network device is a network device that currently serves the terminal device.

In an optional implementation, before receiving the uplink data from the terminal device based on the first uplink grant configured for the terminal device, the first network device receives second information from the third network device, where the second information is used to request to activate the first uplink grant. The first network device sends third information to the third network device, where the third information indicates that the first network device has activated the first uplink grant.

It can be learned that when the third condition is met, the first network device may actively activate the first uplink grant, and indicate, to the terminal device by using the first indication, that the first uplink grant has been activated. Alternatively, when receiving the second information used to request to activate the first uplink grant, the first network device activates the first uplink grant, and indicates, by using the third information, that the first uplink grant has been activated.

In an optional implementation, a start moment of the first time period is a moment at which the terminal device sends a measurement report to the second network device, and an end moment of the first time period is a moment at which the terminal device accesses the first network device, where the second network device is a network device that currently serves the terminal device

According to a fourth aspect, an embodiment of this application provides an access switch method. The method may be applied to a terminal device. The terminal device herein may be the terminal device itself, or may be a processor, a module, a chip, a chip system, or the like that is in the terminal device and that implements the method. In the method, the terminal device sends sixth information when a first condition is met, where the sixth information is used to request to obtain an uplink grant for the terminal device, the first condition is that signal quality corresponding to a first network device is higher than signal quality corresponding to a second network device by a first threshold, the first network device is a target network device to which the terminal device is to perform access switch, and the second network device is a network device that currently serves the terminal device. The terminal device receives seventh information, where the seventh information indicates a first uplink grant configured by the first network device for the terminal device. When a second condition is met, the terminal device sends uplink data to the first network device based on the first uplink grant, to access the first network device, where the second condition is that the signal quality corresponding to the first network device is higher than the signal quality corresponding to the second network device by a second threshold, and the second threshold is greater than the first threshold; or when receiving a cell switch command from the second network device, the terminal device sends uplink data to the first network device based on the first uplink grant, to access the first network device.

In this embodiment of this application, before the second condition is met or before the terminal device receives the cell switch command from the second network device, the terminal device obtains, by using the sixth information and the seventh information, the first uplink grant configured by the first network device for the terminal device. In this way, when the second condition is met or when the terminal device receives the cell switch command from the second network device, the terminal device may directly send the uplink data to the first network device based on the obtained first uplink grant, to access the first network device. This can reduce a delay of the terminal device for switching to the first network device.

In an optional implementation, before sending the uplink data to the first network device based on the first uplink grant, the terminal device further receives a first indication, where the first indication indicates that the first network device has activated the first uplink grant. In other words, the terminal device may learn, by using the received first indication, that the first uplink grant has been activated by the first network device.

In an optional implementation, before sending the uplink data to the first network device based on the first uplink grant, the terminal device receives the first threshold and the second threshold that correspond to the first network device, or receives the first threshold corresponding to the first network device.

According to a fifth aspect, an embodiment of this application further provides an access switch method. The method may be applied to a third network device. The third network device herein may be the third network device itself, or may be a processor, a module, a chip, a chip system, or the like that is in the third network device and that implements the method. In the method, the third network device receives sixth information, and sends the sixth information to a first network device, where the sixth information is used to request to obtain an uplink grant for a terminal device, the sixth information is sent by the terminal device when a first condition is met, the first condition is that signal quality corresponding to the first network device is higher than signal quality corresponding to a second network device by a first threshold, the first network device is a target network device to which the terminal device is to perform access switch, and the second network device is a network device that currently serves the terminal device. The third network device receives seventh information from the first network device, and sends the seventh information, where the seventh information indicates a first uplink grant configured by the first network device for the terminal device.

In this embodiment of this application, when receiving the sixth information used to request the uplink grant for the terminal device, the third network device sends the sixth information to the first network device, to request the first network device to configure the uplink grant for the terminal device. When receiving, from the first network device, the first uplink grant configured for the terminal device, the third network device sends the seventh information, so that the terminal device obtains the first uplink grant. The sixth information received by the third network device is sent by the terminal device when the first condition is met, and the first condition is that the signal quality corresponding to the first network device is higher than the signal quality corresponding to the second network device by the first threshold. In this way, the terminal device obtains the first uplink grant before determining to switch to the first network device, thereby reducing a delay of the terminal device for switching to the first network device.

In an optional implementation, the third network device sends the first threshold and a second threshold that correspond to the first network device, where the second threshold is greater than the first threshold; or sends the first threshold corresponding to the first network device.

According to a sixth aspect, an embodiment of this application further provides an access switch method. The method may be applied to a first network device. The first network device herein may be the first network device itself, or may be a processor, a module, a chip, a chip system, or the like that is in the first network device and that implements the method. In the method, the first network device receives sixth information from a third network device, where the sixth information is used to request to obtain an uplink grant for a terminal device, the sixth information is sent by the terminal device to the third network device when a first condition is met, the first condition is that signal quality corresponding to the first network device is higher than signal quality corresponding to a second network device by a first threshold, the first network device is a target network device to which the terminal device is to perform access switch, and the second network device is a network device that currently serves the terminal device. The first network device sends seventh information to the third network device, where the seventh information indicates a first uplink grant configured by the first network device for the terminal device. The first network device receives uplink data from the terminal device based on the first uplink grant.

In this embodiment of this application, the first network device receives the sixth information used to request the uplink grant for the terminal device, to configure the first uplink grant for the terminal device and indicate the first uplink grant by using the seventh information. The sixth information is sent by the terminal device to the third network device when the first condition is met, so that the terminal device obtains the first uplink grant before determining to switch to the first network device. This helps reduce a delay of the terminal device for switching to the first network device.

In an optional implementation, before receiving the uplink data from the terminal device based on the first uplink grant, the first network device further sends a first indication when a third condition is met, where the first indication indicates that the first network device has activated the first uplink grant. The third condition is that a distance between the terminal device and the first network device is less than or equal to a first preset value, and/or a distance between the terminal device and the second network device is greater than a second preset value.

In other words, when the third condition is met, the first network device determines that the terminal device is to switch to the first network device, to activate the first uplink grant configured for the terminal device, and notify, by using the first indication, that the first uplink grant has been activated.

According to a seventh aspect, an embodiment of this application further provides a communication apparatus. The communication apparatus has some or all functions of the terminal device in the first aspect or the fourth aspect, or some or all functions of the third network device in the second aspect or the fifth aspect, or some or all functions of the first network device in the third aspect or the sixth aspect. For example, the communication apparatus may have functions in some or all of embodiments of the terminal device in the first aspect of embodiments of this application, or may have functions of independently implementing any one of embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing corresponding functions in the foregoing methods. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit.

The communication unit is configured to receive first information, where the first information indicates acknowledgment information that a first network device configures an uplink grant for a terminal device, and the first network device is a target network device to which the terminal device is to perform access switch. The processing unit is configured to determine, based on the first information, a first uplink grant configured by the first network device for the terminal device, where the first uplink grant includes a first time domain resource, the first time domain resource is in a first time period, and the first time period is a time period in which the terminal device switches to the first network device. The processing unit is further configured to switch to the first network device based on the first uplink grant.

In addition, for another optional implementation of the communication apparatus in this aspect, refer to related content in the first aspect. Details are not described herein again.

In another implementation, the communication apparatus includes a processing unit and a communication unit. The processing unit is configured to process a signal/signaling.

The communication unit is configured to send fifth information to a first network device, where the fifth information is used to request the first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch. The communication unit is further configured to: receive first information from the first network device, and send the first information, where the first information indicates acknowledgment information that the first network device configures the uplink grant for the terminal device.

In addition, for another optional implementation of the communication apparatus in this aspect, refer to related content in the second aspect. Details are not described herein again.

In another implementation, the communication apparatus includes a processing unit and a communication unit.

The communication unit is configured to receive fifth information from a third network device, where the fifth information is used to request a first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch. The communication unit is further configured to send first information to the third network device, where the first information indicates acknowledgment information that the first network device configures the uplink grant for the terminal device. The processing unit is configured to receive uplink data from the terminal device based on a first uplink grant configured for the terminal device, where the first uplink grant includes a first time domain resource, and the first time domain resource is in the first time period.

In addition, for another optional implementation of the communication apparatus in this aspect, refer to the related content of the third aspect. Details are not described herein again.

In another implementation, the communication apparatus includes a processing unit and a communication unit. The processing unit is configured to process a signal/signaling.

The communication unit is configured to: send sixth information when a first condition is met, where the sixth information is used to request to obtain an uplink grant for a terminal device, the first condition is that signal quality corresponding to a first network device is higher than signal quality corresponding to a second network device by a first threshold, the first network device is a target network device to which the terminal device is to perform access switch, and the second network device is a network device that currently serves the terminal device. The communication unit is further configured to receive seventh information, where the seventh information indicates a first uplink grant configured by the first network device for the terminal device. The communication unit is further configured to: when a second condition is met, send uplink data to the first network device based on the first uplink grant, to access the first network device, where the second condition is that the signal quality corresponding to the first network device is higher than the signal quality corresponding to the second network device by a second threshold, and the second threshold is greater than the first threshold; or when receiving a cell switch command from the second network device, send uplink data to the first network device based on the first uplink grant, to access the first network device.

In addition, for another optional implementation of the communication apparatus in this aspect, refer to the related content of the fourth aspect. Details are not described herein again.

In another implementation, the communication apparatus includes a processing unit and a communication unit. The processing unit is configured to process a signal/signaling.

The communication unit is configured to: receive sixth information, and send the sixth information to a first network device, where the sixth information is used to request to obtain an uplink grant for a terminal device, the sixth information is sent by the terminal device when a first condition is met, the first condition is that signal quality corresponding to the first network device is higher than signal quality corresponding to a second network device by a first threshold, the first network device is a target network device to which the terminal device is to perform access switch, and the second network device is a network device that currently serves the terminal device. The communication unit is further configured to: receive seventh information from the first network device, and send the seventh information, where the seventh information indicates a first uplink grant configured by the first network device for the terminal device.

In addition, for another optional implementation of the communication apparatus in this aspect, refer to the related content of the fifth aspect. Details are not described herein again.

In another implementation, the communication apparatus includes a processing unit and a communication unit.

The communication unit is configured to receive sixth information from a third network device, where the sixth information is used to request to obtain an uplink grant for a terminal device, the sixth information is sent by the terminal device to the third network device when a first condition is met, the first condition is that signal quality corresponding to a first network device is higher than signal quality corresponding to a second network device by a first threshold, the first network device is a target network device to which the terminal device is to perform access switch, and the second network device is a network device that currently serves the terminal device. The communication unit is further configured to send seventh information to the third network device, where the seventh information indicates a first uplink grant configured by the first network device for the terminal device. The processing unit is configured to receive uplink data from the terminal device based on the first uplink grant.

In addition, for another optional implementation of the communication apparatus in this aspect, refer to the related content of the sixth aspect. Details are not described herein again.

For example, the communication unit may be a transceiver or a communication interface, the storage unit may be a memory, and the processing unit may be a processor.

In an implementation, the communication apparatus includes a processor and a transceiver.

The transceiver is configured to receive first information, where the first information indicates acknowledgment information that a first network device configures an uplink grant for a terminal device, and the first network device is a target network device to which the terminal device is to perform access switch. The processor is configured to determine, based on the first information, a first uplink grant configured by the first network device for the terminal device, where the first uplink grant includes a first time domain resource, the first time domain resource is in a first time period, and the first time period is a time period in which the terminal device switches to the first network device. The processor is further configured to switch to the first network device based on the first uplink grant.

In addition, for another optional implementation of the communication apparatus in this aspect, refer to related content in the first aspect. Details are not described herein again.

In another implementation, the communication apparatus includes a processor and a transceiver. The processor is configured to process a signal/signaling.

The transceiver is configured to send fifth information to a first network device, where the fifth information is used to request the first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch. The transceiver is further configured to: receive first information from the first network device, and send the first information, where the first information indicates acknowledgment information that the first network device configures the uplink grant for the terminal device.

In addition, for another optional implementation of the communication apparatus in this aspect, refer to related content in the second aspect. Details are not described herein again.

In another implementation, the communication apparatus includes a processor and a transceiver.

The transceiver is configured to receive fifth information from a third network device, where the fifth information is used to request a first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch. The transceiver is further configured to send first information to the third network device, where the first information indicates acknowledgment information that the first network device configures the uplink grant for the terminal device. The processor is configured to receive uplink data from the terminal device based on a first uplink grant configured for the terminal device, where the first uplink grant includes a first time domain resource, and the first time domain resource is in the first time period.

In addition, for another optional implementation of the communication apparatus in this aspect, refer to the related content of the third aspect. Details are not described herein again.

In another implementation, the communication apparatus includes a processor and a transceiver. The processor is configured to process a signal/signaling.

The transceiver is configured to: send sixth information when a first condition is met, where the sixth information is used to request to obtain an uplink grant for a terminal device, the first condition is that signal quality corresponding to a first network device is higher than signal quality corresponding to a second network device by a first threshold, the first network device is a target network device to which the terminal device is to perform access switch, and the second network device is a network device that currently serves the terminal device. The transceiver is further configured to receive seventh information, where the seventh information indicates a first uplink grant configured by the first network device for the terminal device. The transceiver is further configured to: when a second condition is met, send uplink data to the first network device based on the first uplink grant, to access the first network device, where the second condition is that the signal quality corresponding to the first network device is higher than the signal quality corresponding to the second network device by a second threshold, and the second threshold is greater than the first threshold; or when receiving a cell switch command from the second network device, send uplink data to the first network device based on the first uplink grant, to access the first network device.

In addition, for another optional implementation of the communication apparatus in this aspect, refer to the related content of the fourth aspect. Details are not described herein again.

In another implementation, the communication apparatus includes a processor and a transceiver. The processor is configured to process a signal/signaling.

The transceiver is configured to: receive sixth information, and send the sixth information to a first network device, where the sixth information is used to request to obtain an uplink grant for a terminal device, the sixth information is sent by the terminal device when a first condition is met, the first condition is that signal quality corresponding to the first network device is higher than signal quality corresponding to a second network device by a first threshold, the first network device is a target network device to which the terminal device is to perform access switch, and the second network device is a network device that currently serves the terminal device. The transceiver is further configured to: receive seventh information from the first network device, and send the seventh information, where the seventh information indicates a first uplink grant configured by the first network device for the terminal device.

In addition, for another optional implementation of the communication apparatus in this aspect, refer to the related content of the fifth aspect. Details are not described herein again.

In another implementation, the communication apparatus includes a processor and a transceiver.

The transceiver is configured to receive sixth information from a third network device, where the sixth information is used to request to obtain an uplink grant for a terminal device, the sixth information is sent by the terminal device to the third network device when a first condition is met, the first condition is that signal quality corresponding to a first network device is higher than signal quality corresponding to a second network device by a first threshold, the first network device is a target network device to which the terminal device is to perform access switch, and the second network device is a network device that currently serves the terminal device. The transceiver is further configured to send seventh information to the third network device, where the seventh information indicates a first uplink grant configured by the first network device for the terminal device. The processor is configured to receive uplink data from the terminal device based on the first uplink grant.

In addition, for another optional implementation of the communication apparatus in this aspect, refer to the related content of the sixth aspect. Details are not described herein again.

In another implementation, the communication apparatus is a chip or a chip system. The processing unit may alternatively be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the components are separately disposed on different chips or integrated and disposed on one or more chips usually depends on a requirement of a product design. Implementations of the foregoing components are not limited in embodiments of this application.

According to an eighth aspect, an embodiment of this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to the transceiver, so that the transceiver transmits the information. After the information is outputted by the processor, other processing may further need to be performed on the information before the information arrives at the transceiver. Similarly, when the processor receives the input information, the transceiver receives the information, and inputs the information into the processor. Further, after the transceiver receives the foregoing information, other processing may need to be performed on the foregoing information before the information is input into the processor.

Operations such as sending and receiving related to the processor may be more generally understood as operations such as an output, receiving, and an input of the processor, unless otherwise specified or if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a ninth aspect, an embodiment of this application further provides a communication system. The system includes a terminal device, a first network device, a second network device, and a third network device. In another possible design, the system may further include another device that interacts with the terminal device, the first network device, the second network device, and the third network device.

According to a tenth aspect, an embodiment of this application provides a computer-readable storage medium, configured to store instructions, and when the instructions are run by a computer, the method according to any one of the first aspect to the sixth aspect is implemented.

According to an eleventh aspect, an embodiment of this application further provides a computer program product including instructions. When the computer program product runs on a computer, the method according to any one of the first aspect to the sixth aspect is implemented.

According to a twelfth aspect, an embodiment of this application provides a chip system. The chip system includes a processor and an interface. The interface is configured to obtain a program or instructions, and the processor is configured to invoke the program or the instructions to implement or support a terminal device in implementing a function in the first aspect or the fourth aspect, or implement or support a third network device in implementing a function in the second aspect or the fifth aspect, or implement or support a first network device in implementing a function in the third aspect or the sixth aspect, for example, determining or processing at least one of data and information in the foregoing methods. In a possible design, the chip system further includes a memory. The memory is configured to store program instructions and data that are necessary for a terminal. The chip system may include a chip, or may include a chip and another discrete component.

According to a thirteenth aspect, an embodiment of this application provides a communication apparatus, including a processor, configured to execute a computer program or executable instructions stored in a memory. When the computer program or the executable instructions are executed, the apparatus is enabled to perform the method according to the possible implementations of the first aspect to the sixth aspect.

In a possible implementation, the processor and the memory are integrated together. In another possible implementation, the memory is located outside the communication apparatus.

For beneficial effect of the seventh aspect to the thirteenth aspect, refer to the beneficial effect of the first aspect to the sixth aspect. Details are not described herein again.

### BRIEF DESCRIPTION OF DRAWINGS

FIG. 1 is a diagram of an architecture of a non-terrestrial network (non-terrestrial network, NTN);
FIG. 2 is a diagram of an architecture of another NTN network;
FIG. 3 is a diagram of an architecture of another NTN network;
FIG. 4 is a diagram of an architecture of another NTN network;
FIG. 5 is a schematic flowchart of layer 1/layer 2 triggered mobility (layer 1/layer 2 triggered mobility, LTM);
FIG. 6 is an interaction diagram of an access switch method according to an embodiment of this application;
FIG. 7 is an interaction diagram of another access switch method according to an embodiment of this application;
FIG. 8A and FIG. 8B are an interaction diagram of another access switch method according to an embodiment of this application;
FIG. 9 is an interaction diagram of another access switch method according to an embodiment of this application;
FIG. 10 is an interaction diagram of another access switch method according to an embodiment of this application;
FIG. 11 is an interaction diagram of another access switch method according to an embodiment of this application;
FIG. 12 is an interaction diagram of another access switch method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

To better understand the access switch methods disclosed in embodiments of this application, a system to which embodiments of this application are applicable is described.

Embodiments of this application may be applied to a 4th generation (the 4th generation, 4G) mobile communication system, a 5th generation (the 5th generation, 5G) mobile communication system, a non-terrestrial network (non-terrestrial network, NTN) communication system, vehicle-to-everything (vehicle-to-everything, V2X), long term evolution-vehicle (long term evolution-vehicle, LTE-V), vehicle-to-vehicle (vehicle-to-vehicle, V2V), machine type communication (machine type communication, MTC), internet of things (internet of things, IoT), long term evolution-machine to machine (LTE-machine to machine, LTE-M), machine to machine (machine to machine, M2M), or a future mobile communication system.

In embodiments of this application, the network device is an access device through which the terminal device accesses a mobile communication system in a wireless manner, for example, includes an access network (access network, AN) device like a base station. The network device may alternatively be a device that communicates with the terminal device through an air interface. The network device may include an evolved NodeB (evolved NodeB) (also referred to as an eNB or an e-NodeB) in a long term evolution (long term evolution, LTE) system or long term evolution-advanced (long term evolution-advanced, LTE-A) system; or the network device may include a next generation NodeB (next generation NodeB, gNB) in a 5G new radio (new radio, NR) system; or the network device may include an access node in a wireless fidelity (wireless fidelity, Wi-Fi) system or the like; or the network device may be a relay station, a vehicle-mounted device, a future evolved public land mobile network (public land mobile network, PLMN) device, a device in a device-to-device (device-to-device, D2D) network, a device in an M2M network, a device in an IoT network, or a network device in a public land mobile network (public land mobile network, PLMN). A specific technology and a specific device form that are used by the network device are not limited in embodiments of this application.

In embodiments of this application, a communication apparatus configured to implement functions of the network device may be a network device, or may be an apparatus that can support the network device in implementing the functions, for example, a chip system. The apparatus may be mounted in the network device. In the technical solutions provided in embodiments of this application, an example in which the apparatus configured to implement the functions of the network device is the network device is used for describing the technical solutions provided in embodiments of this application.

In embodiments of this application, an access network device may be a server or the like. For example, a network device in a vehicle V2X technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies.

The base station in embodiments of this application may include a central unit (central unit, CU) and a distributed unit (distributed unit, DU). A plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely deployed and not disposed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by the terminal device may be sent to the CU through the DU. The DU may transparently transmit the signaling to the terminal device or the CU by directly encapsulating the signaling at a protocol layer without parsing the signaling. In this network architecture, the CU is classified as a network device on a radio access network (radio access network, RAN) side. In addition, the CU may alternatively be classified as a network device on a core network (core network, CN) side. This is not limited in this application.

In embodiments of this application, a core network device is configured to implement functions such as mobility management, data processing, session management, and policy and charging. Names of devices that implement functions of a core network in systems using the different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, the terminal device is a device having a wireless transceiver function, and may send a signal to the network device, or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect to a person, an object, a machine, and the like, and may be widely used in various scenarios. For example, the terminal device includes but is not limited to terminal devices in scenarios such as cellular communication, D2D, V2X, M2M/MTC, IoT, virtual reality (virtual reality, VR), augmented reality (augmented reality, AR), industrial control (industrial control), self-driving (self-driving), telemedicine (telemedicine), a smart grid (smart grid), smart furniture, smart office, a smart wearable, smart transportation, a smart city (smart city), an uncrewed aerial vehicle, and a robot. For example, the terminal device may be a mobile phone (mobile phone), a tablet computer (Pad), a computer with a wireless transceiver function, a VR terminal, an AR terminal, a wireless terminal in the industrial control, a wireless terminal in the self-driving, a smart speaker in an IoT network, a wireless terminal device in the remote medical, a wireless terminal device in the smart grid, a wireless terminal device in transportation security, a wireless terminal device in the smart city, or a wireless terminal device in a smart home. By way of example, but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle module, a vehicle-mounted assembly, a vehicle-mounted component, a vehicle-mounted chip, or a vehicle-mounted unit that is disposed in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is disposed in the vehicle.

In a possible application scenario of embodiments of this application, an NTN system may include a satellite system. Based on a satellite altitude, namely, a satellite orbit altitude, a satellite system is classified into a highly elliptical orbit (highly elliptical orbit, HEO) satellite, a geosynchronous earth orbit (geosynchronous earth orbit, GEO) satellite, a medium earth orbit (medium earth orbit, MEO) satellite, and a low-earth orbit (low-earth orbit, LEO) satellite. In addition, the NTN system may further include an air network device, for example, a high altitude platform station (high altitude platform station, HAPS) communication system. The air network device in this application is not limited to the foregoing examples.

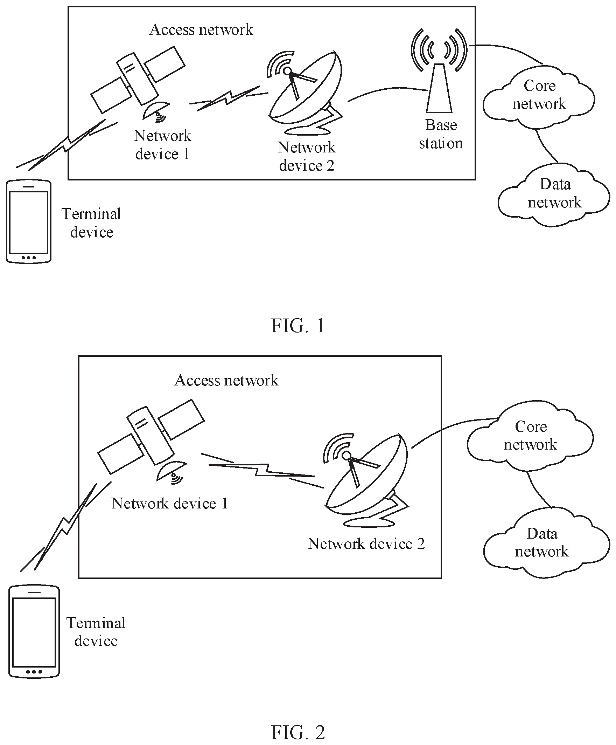

FIG. 1 is a diagram of an architecture of an NTN network. As shown in FIG. 1, the NTN network includes a network device 1, a network device 2, a terrestrial base station, a terrestrial core network, a data network, and a terminal device. The network device 1 may be a satellite, for example, may be an HEO satellite, a GEO satellite, an MEO satellite, a LEO satellite, or an HAPS. This is not limited herein. The network device 2 may be a gateway (gateway) (or referred to as a terrestrial station, an earth station, or a gateway station), and may be configured to connect the network device 1 to the base station. One or more network devices 1 may be connected to one or more terrestrial base stations through one or more network devices 2. This is not limited herein. In FIG. 1, a communication mode of the network device 1 is a transparent (transparent) mode. To be specific, the network device 1 serves as an analog radio frequency repeater to implement radio frequency conversion and amplification, and can perform transparent transmission of or copy a signal between the terrestrial base station and the terminal device. For example, a signal sent by the terminal device may be transparently transmitted by the network device 1, forwarded by the network device 2, and then sent to the terrestrial base station.

The communication mode of the network device 1 is not limited in embodiments of this application. For example, the communication mode of the network device 1 may alternatively be a regenerative (regenerative) mode. FIG. 2 is a diagram of an architecture of another NTN network. In FIG. 2, the communication mode of the network device 1 is the regenerative mode. To be specific, the network device 1 can serve as a base station for wireless communication to regenerate signals received from the ground, and can understand and process these signals. For example, the network device 1 may be a base station mounted on an artificial earth satellite or a high-altitude aircraft. For example, the base station may be an evolved base station (eNB) or a 5G base station (gNB). The network device 2 may forward signaling between the network device 1 (namely, the base station) and the core network.

It should be noted that FIG. 2 shows only one network device 1 and one network device 2. During actual use, an architecture of a plurality of network devices 1 and/or a plurality of network device 2 may be used as required. Each network device 1 may serve one or more terminal devices, each network device 2 may correspond to one or more network devices 1, and each network device 1 may correspond to one or more network devices 2. This is not specifically limited in embodiments of this application.

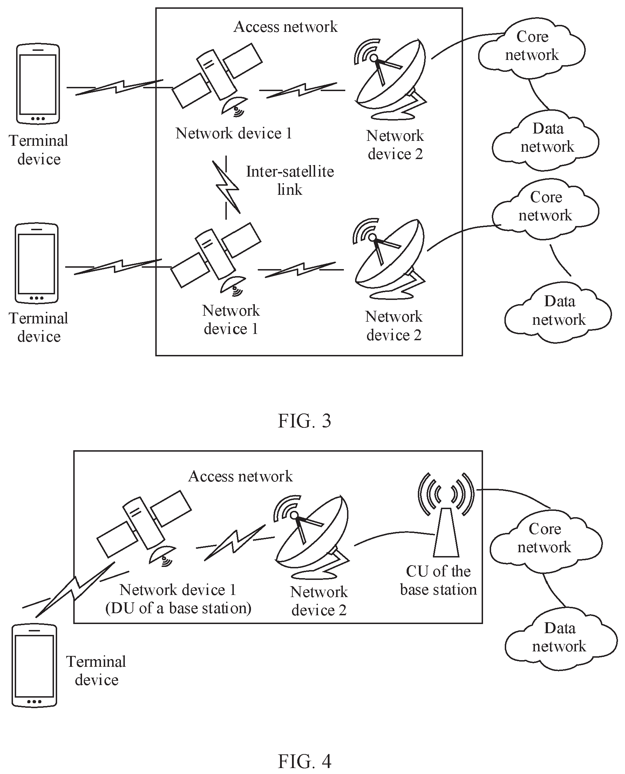

FIG. 3 is a diagram of an architecture of another NTN network. As shown in FIG. 3, for example, the NTN network includes two network devices 1 and two network devices 2. Communication modes of the two network devices 1 are regeneration modes. To be specific, the two network devices 1 may serve as base stations for wireless communication. A difference from the NTN network shown in FIG. 2 lies in that there is an inter-satellite link (inter-satellite link, ISL) between the two network devices 1. In other words, in the architecture of the NTN network shown in FIG. 3, different network devices 1 may communicate with each other, or may be connected to a same terrestrial core network.

In an example, the network device 1 may alternatively serve as a DU of a base station, and is separated from a CU of a terrestrial base station, to form a CU-DU distributed architecture. For example, FIG. 4 is a diagram of an architecture of another NTN network. A difference between the NTN network shown in FIG. 4 and the NTN network shown in FIG. 1 lies in that a network device 1 serves as a DU of a base station, and can understand, process, and regenerate a signal from the ground, instead of merely transparently transmitting or copying the signal, and the terrestrial base station serves only as a CU. In the architecture of the NTN network shown in FIG. 4, a serving link between a terminal device and the network device 1 may be used for transmission of an NR-Uu radio interface signal, a feeder link between the network device 1 and a network device 2 is used for transmission of a satellite radio interface (satellite radio interface, SRI) signal, and transmission of an F1 interface signal between the DU and the CU may be performed via the SRI signal.

It should be noted that the NTN networks shown in FIG. 1 to FIG. 4 are used as examples in embodiments of this application, and this scenario is not limited thereto. Embodiments of this application may be applied to the NTN networks shown in FIG. 1 to FIG. 4, but are not limited to the NTN networks shown in FIG. 1 to FIG. 4.

Embodiments of this application are applicable to an intra-CU inter-DU (intra-CU inter-DU) scenario, that is, applicable to a scenario in which there is one CU and the CU controls a plurality of DUs. The CU may be a terrestrial base station in the NTN network, and the plurality of DUs may be a plurality of satellites in NTN network devices.

Optionally, embodiments of this application are also applicable to an inter-CU scenario, that is, applicable to a scenario in which there are a plurality of DUs and each of the plurality of DUs is connected to one CU. When embodiments of this application are applicable to the inter-CU scenario, interaction between a first network device and a second network device is performed via a CU connected to the first network device and a CU connected to the second network device. For example, that the first network device sends first information includes: The first network device sends the first information to the CU connected to the first network device, the CU connected to the first network device sends the first information to the CU connected to the second network device, the CU connected to the second network device sends the first information to the second network device, and the second network device sends the first information to the terminal device.

In embodiments of this application, the first network device is a target network device to which the terminal device is to perform access switch, the second network device is a network device that currently serves the terminal device, and a third network device is a network device that controls the first network device and the second network device. In other words, the terminal device is to switch from the second network device to the first network device, and the third network device is configured to control the first network device and the second network device. When embodiments of this application are applicable to the intra-CU inter-DU scenario in the NTN network, a first network device is a target DU to which the terminal device is to perform access switch, namely, a DU deployed on a target satellite to which the terminal device is to perform access switch; a second network device is a DU that currently serves the terminal device, namely, a DU deployed on a satellite that currently serves the terminal device; and a third network device is a CU, where the CU is located on the ground, in other words, the third network device is a terrestrial base station.

In embodiments of this application, the CU and the DU may be one product, or may be two separate products.

Optionally, embodiments of this application may also be applied to an intra-CU inter-DU scenario in a terrestrial network.

It should be noted that embodiment of this application may be applied to switch between DUs and cell switch. When embodiments of this application are applied to the cell switch, a second network device may perform some steps that need to be performed by a third network device.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The following describes related concepts in embodiments of this application.

### 1. LTM

LTM is a process in which a base station changes a serving cell of a terminal device by using a medium access control-control element (medium access control-control element, MAC CE) and a cell switch command (cell switch command, CSC) when the base station receives an L1 measurement report from the terminal device. The base station prepares and provides LTM candidate cell configurations for the terminal device in advance via radio resource control (radio resource control, RRC) signaling. The base station selects a target cell from the LTM candidate cell configurations based on the L1 measurement report, and triggers, by using the cell switch command, the terminal device to switch to the target cell. The base station may add, modify, and release an LTM candidate cell configuration via the RRC signaling.

Consecutive LTM between the LTM candidate cell configurations (that is, the terminal device does not release other LTM candidate cell configurations after LTM is triggered) may be performed without RRC reconfiguration. LTM supports both intra-gNB-DU and intra-gNB-CU inter-gNB-DU mobility. LTM also supports inter-frequency mobility, including mobility to an inter-frequency cell that is not a current serving cell. Consecutive LTM is executed by repeatedly performing steps such as early synchronization, LTM execution, and LMT completion, and the LTM candidate cell configurations are not released after each LTM completion. Optionally, in a satellite communication scenario, after the terminal device performs LTM completion each time, the terminal device may delete the LTM candidate cell configurations.

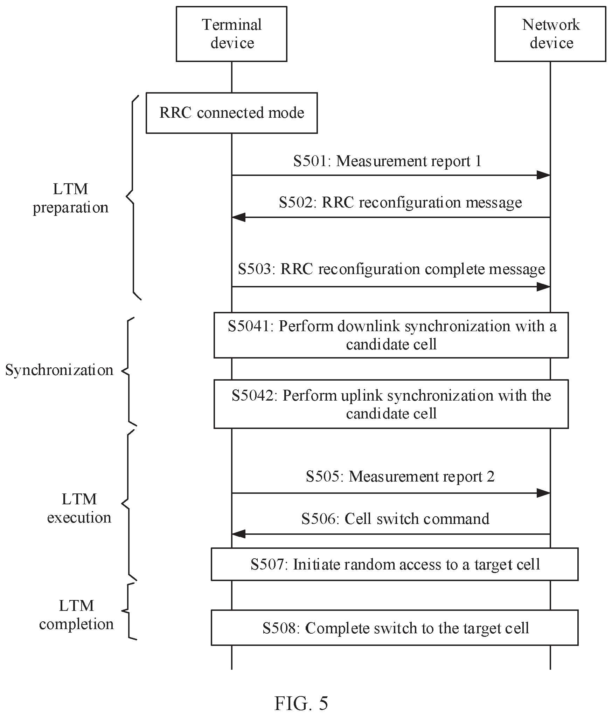

FIG. 5 is a schematic flowchart of LTM. As shown in FIG. 5, a procedure in which a terminal device performs LTM includes but is not limited to the following steps.

S501: The terminal device sends a measurement report 1 to a network device. Correspondingly, the network device receives the measurement report 1 from the terminal device. The terminal device is in an RRC connected mode, and the measurement report 1 is a layer 3 (L3) measurement report.

S502: The network device sends an RRC reconfiguration (RRC reconfiguration) message to the terminal device, where the RRC reconfiguration message includes LTM candidate cell configurations of one or more candidate cells. Correspondingly, the terminal device receives the RRC reconfiguration message from the network device.

Before sending the RRC reconfiguration message to the terminal device, the network device determines, based on the measurement report 1 reported by the terminal device, to use LTM, and starts a preparation for a candidate cell of the terminal device.

S503: The terminal device sends an RRC reconfiguration complete (RRC reconfiguration complete) message to the network device. Correspondingly, the network device receives the RRC reconfiguration complete message from the terminal device.

It may be understood that after receiving the RRC reconfiguration message from the network device, the terminal device stores the LTM candidate cell configurations, and sends the RRC reconfiguration complete message, namely, a message indicating that RRC reconfiguration configuration completes, to the network device.

S5041: The terminal device performs downlink synchronization with the candidate cell.

S5042: The terminal device performs uplink synchronization with the candidate cell.

It may be understood that before receiving a CSC, the terminal device may perform synchronization with the candidate cell, and obtain a timing advance (timing advance, TA) corresponding to the candidate cell. Before receiving the cell switch command, the terminal device may perform downlink synchronization with the candidate cell by using a synchronization signal and physical broadcast channel block (synchronization signal and physical broadcast channel block, SSB). In addition, the terminal device supports at least a random access channel (random access channel, RACH) initiated by using a physical downlink control channel (physical downlink control channel, PDCCH) order (order) in obtaining a TA value of the candidate cell before the LTM cell switch command CSC, where the PDCCH order may be triggered by a source cell of the terminal device. Further, the random access channel may also be referred to as random access for short.

S505: The terminal device sends a measurement report 2 to the network device. Correspondingly, the network device receives the measurement report 2 from the terminal device.

It may be understood that the terminal device measures the configured candidate cell to obtain the measurement report 2, and sends the measurement report 2 to the network device. The measurement report 2 is an L1 measurement report.

Currently, when the terminal device sends the measurement report 2, periodic reporting on a physical uplink control channel (physical uplink control channel, PUCCH), semi-static reporting on the PUCCH/physical uplink shared channel (physical uplink shared channel, PUSCH), and aperiodic reporting on the PUSCH are supported.

S506: The network device sends the cell switch command to the terminal device. Correspondingly, the terminal device receives the cell switch command from the network device.

It may be understood that when determining, based on the measurement report 2, that the terminal device needs to perform cell switch to a target cell, the network device sends the cell switch command to the terminal device, to trigger the terminal device to switch to the target cell. The cell switch command includes a candidate configuration index of the target cell, and the cell switch command is carried in MAC CE signaling.

S507: The terminal device initiates random access to the target cell.

After receiving the cell switch command from the network device, the terminal device initiates random access to the target cell, that is, performs a random access process to the target cell, to access the target cell.

S508: The terminal device completes switch to the target cell.

As shown in FIG. 5, in the LTM procedure shown in FIG. 5, S501 to S503 may be considered as a preparation phase in which the terminal device performs LTM, S5041 and S5042 may be considered as a phase of synchronization between the terminal device and the candidate cell, S505 to S507 may be considered as a phase in which the terminal device performs LTM, and S508 may be considered as a phase in which the terminal device completes performing LTM.

Optionally, after the terminal device completes switch to the target cell, the terminal device may further perform cell switch in consecutive LTM based on a measurement configuration in the RRC configuration message in S502 and according to S504 to S508.

### 2. Uplink grant (uplink grant, UL grant)

The UL grant is specific physical control channel information from a network side, and is another name of a downlink control information (downlink control information, DCI) format. The UL grant carries a plurality of types of information, and the most important information is "resource allocation" and a modulation and coding scheme (modulation and coding scheme, MCS). After obtaining the UL grant, a terminal device may transmit data based on the UL grant, for example, transmit data based on a resource and the MCS that are in the UL grant.

### 3. Random access channel-less (random access channel-less, RACH-less)

RACH-less means that if a terminal device can obtain a TA of a target cell and an initial UL grant of the target cell in advance by using a related mechanism, the terminal device skips sending a Msg 1 and a Msg 2 and directly sends a Msg 3 to the target cell in a process of performing random access by the terminal device to the target cell.

In NTN communication, the TA of the target cell may be usually obtained in advance by using an ephemeris or the like. In this way, if the terminal device can obtain the initial UL grant of the target cell in advance, the terminal device can perform RACH-less switch. The terminal device performs RACH-less switch, so that a switch delay can be reduced to a specific extent.

### 4. Conditional handover (conditional handover, CHO)

CHO means that after receiving a CHO configuration, a terminal device does not immediately perform a switch action, but continues to measure and evaluate a candidate cell, and selects a corresponding target cell for access when a switch condition is met. In an NTN scenario, current CHO includes time-based CHO and location-based CHO.

Time-based CHO means that each candidate cell corresponds to a time period, and when the terminal device switches to a candidate cell, the terminal device starts to perform CHO after entering a time period corresponding to the candidate cell. Location-based CHO means that the terminal device starts to perform CHO when a distance between the terminal device and a reference location of a primary cell is greater than a threshold 1 and a distance between the terminal device and a reference location corresponding to a candidate cell is less than a threshold 2. In addition, CHO in the NTN scenario may be combined with an event A3/A4/A5.

Compared with terrestrial communication, satellite communication has been widely used in many fields such as aviation and energy because of its wide coverage, no geographical environment limitation, and high reliability. Currently, as an extremely important communication scenario in 5G communication, satellite communication has been introduced by the 3rd generation partnership project (3rd generation partnership project, 3GPP) under the name of NTN. Satellite communication can provide communication services for areas that cannot be covered or are insufficiently covered by a terrestrial network; can also provide stable emergency communication in a case of natural disasters or large-scale sports events; can provide high-quality communication services for users on transportation means such as trains, ships, and airplanes; and can provide dedicated services for government and enterprise users to meet specific service requirements.

In the terrestrial network, when a terminal device detects that signal quality of a current cell deteriorates or signal quality of a neighboring cell improves, the terminal device reports a signal quality measurement report to a network device currently connected to the terminal device. After receiving the measurement report, the network device selects a target cell for the terminal device, and notifies the terminal device of the target cell. In this case, the terminal device performs switch between the target cell and the current cell.

However, in a non-terrestrial network, a satellite is far away from the ground, and round-trip transmission time of a signal may usually reach several milliseconds or even tens of milliseconds. If the terminal device still performs cell switch by using a cell switch method in the terrestrial network, a large switch delay is caused. In addition, signal quality is usually poor when the terminal device performs switch, and the large switch delay may cause a switch failure of the terminal. Therefore, a switch technology in the terrestrial network cannot be directly used in a satellite network.

To reduce the switch delay of the terminal device in the NTN network, the terminal device may perform RACH-less in LTM. To be specific, the terminal device does not perform a random access procedure in S507 in the LTM procedure shown in FIG. 5, but directly sends uplink data to a target DU by using an UL grant, to access the target DU. In the NTN scenario, a TA of the target DU may be obtained in advance by using ephemeris information, and the UL grant may be obtained in a configured grant (configured grant) manner and a dynamic grant (dynamic grant) manner.

In the configured grant manner, when delivering a CSC, a source DU sends the UL grant to the terminal device. In this manner, the source DU needs to send a UL grant request to the target (target) DU before sending the CSC. However, in an intra-CU inter-DU (namely, intra-CU inter-DU) switch scenario, the source DU and the target DU communicate with each other via F1AP signaling. To be specific, information is sent from the source DU to the CU and then from the CU to the target DU, and a delay is greater than 10 ms, resulting in an additional delay and an increase in switch time.

For the dynamic grant, in the intra-CU inter-DU switch scenario, the UL grant may be provided by the target DU through a PDCCH. In this manner, the source DU also needs to notify the target DU that UE is to switch to the target DU. If the source DU receives an L1 measurement report and then indicates the target DU to send the UL grant, F1AP signaling interaction also causes an additional delay. In addition, the target DU also needs to wait for a PDCCH occasion to send a PDCCH.

In another manner, a network device may configure, for the terminal device before the terminal device performs LTM, UL grants for all candidate DUs, and deliver the UL grants to the terminal device by using an RRC reconfiguration message. After receiving a cell switch command, the terminal device directly sends uplink data to the target DU by using an UL grant corresponding to the target DU. However, in this scenario, all the candidate DUs of the terminal device need to reserve resources in the UL grant for the terminal device in advance. The reserved resources are abundant and cannot be used by another terminal device, causing a waste of resources.

In still another manner, the terminal device may alternatively use CHO and RACH-less in LTM. In this manner, a target DU also needs to reserve, in advance, resources corresponding to an UL grant for the terminal device. For example, in time-based CHO, the target DU needs to reserve resources [t1, t2] corresponding to the UL grant for the terminal device, and the resources cannot be used by another terminal device, which also causes a waste of resources.

An embodiment of this application provides an access switch method 100. In the access switch method 100, a third network device requests, by using fifth information, a first network device to configure an uplink grant for a terminal device. The first network device indicates, by using first information, acknowledgment information that the first network device configures the uplink grant for the terminal device. The terminal device determines, based on the first information, a first uplink grant configured by the first network device for the terminal device, and sends uplink data to the first network device based on the first uplink grant, to access the first network device. The fifth information includes information indicating a first time period. The first time period is a time period in which the terminal device switches to the first network device, and a time domain resource in the uplink grant is in the first time period. In this way, a first time domain resource in the first uplink grant configured by the first network device for the terminal device based on the first time period is in the first time period, so that the first time domain resource occupies short time, in other words, the first network device reserves a small quantity of time domain resources for the terminal device in advance, thereby reducing a waste of resources.

An embodiment of this application further provides an access switch method 200. In the access switch method 200, when a first condition is met, a terminal device requests, by using sixth information, to obtain an uplink grant for the terminal device. The first condition is that signal quality corresponding to a first network device is higher than signal quality corresponding to a second network device by a first threshold. The first network device indicates, by using seventh information, a first uplink grant configured by the first network device for the terminal device. Further, when a second condition is met or when the terminal device receives a cell switch command from the second network device, the terminal device may send uplink data to the first network device based on the first uplink grant, to access the first network device. This can reduce a switch delay of the terminal device for switching to the first network device. The second condition is that the signal quality corresponding to the first network device is higher than the signal quality corresponding to the second network device by a second threshold, where the second threshold is greater than the first threshold.

An embodiment of this application further provides an access switch method 300. In the access switch method 300, a third network device requests, by using eighth information, a first network device to configure a random access resource for a terminal device. The first network device indicates, by using ninth information, a first random access resource configured for the terminal device. In this way, before receiving a cell switch command from a second network device, the terminal device obtains the first random access resource configured by the first network device for the terminal device. Further, when receiving the cell switch command from the second network device, the terminal device may directly initiate random access to the first network device based on the obtained first random access resource, to reduce a switch delay of the terminal device for switching to the first network device.

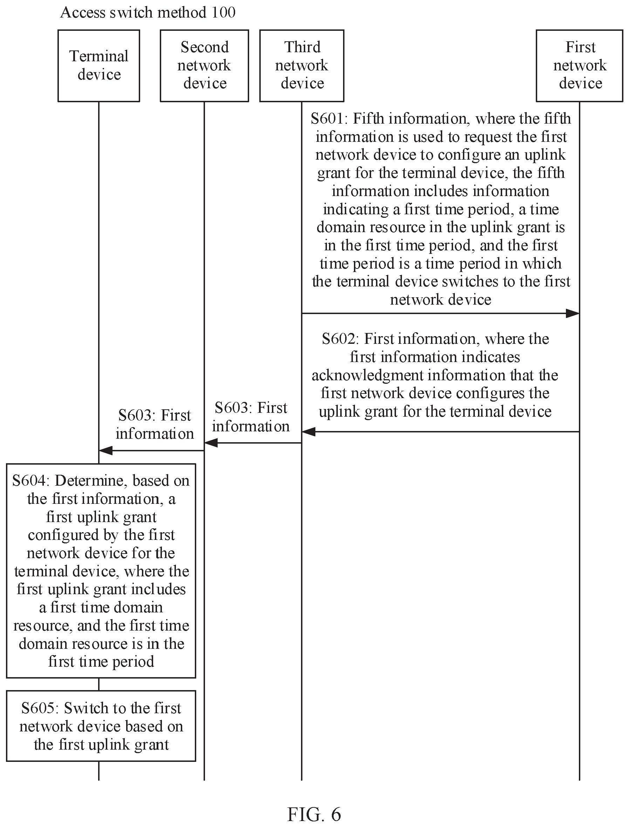

An embodiment of this application provides an access switch method 100. FIG. 6 is an interaction diagram of the access switch method 100. The access switch method 100 is described from a perspective of interaction between a terminal device, a first network device, a second network device, and a third network device. The access switch method 100 includes but is not limited to the following steps.

S601: The third network device sends fifth information to the first network device, where the fifth information is used to request the first network device to configure an uplink grant for the terminal device, the fifth information includes information indicating a first time period, a time domain resource in the uplink grant is in the first time period, and the first time period is a time period in which the terminal device switches to the first network device. Correspondingly, the first network device receives the fifth information from the third network device.

The first time period is the time period in which the terminal device switches to the first network device. The switch to the first network device performed by the terminal device may be triggered mobility LTM or RACH-less. A manner in which the terminal device switches to the first network device is not limited in embodiments of this application.

For example, when the switch to the first network device performed by the terminal device is LTM, a start moment of the first time period is a start moment at which the terminal device performs LTM to the first network device, and an end moment of the first time period is an end moment at which the terminal device performs LTM to the first network device. The start moment at which the terminal device performs LTM to the first network device is a moment at which the terminal device sends a layer 1 measurement report to the second network device, and the end moment at which the terminal device performs LTM to the first network device is a moment at which the terminal device accesses the first network device. For example, the end moment is a moment at which the terminal device sends uplink data to the first network device. For another example, the end moment is a moment at which the terminal device receives an acknowledgment (acknowledgment, ACK) from the first network device. The ACK is a reply from the first network device for successfully receiving the uplink data from the terminal device. In other words, the start moment of the first time period may be the moment at which the terminal device sends the layer 1 measurement report to the second network device, and the end moment of the first time period may be the moment at which the terminal device accesses the first network device.

Optionally, the start moment at which the terminal device performs LTM to the first network device is a moment at which the terminal device sends a first piece of uplink data to the first network device, and the end moment at which the terminal device performs LTM to the first network device is an end moment at which the terminal device sends the uplink data to the first network device. In other words, the start moment of the first time period is the moment at which the terminal device sends the first piece of uplink data to the first network device, and the end moment of the first time period is the end moment at which the terminal device sends the uplink data to the first network device. Compared with the manner in which the start moment of the first time period is the moment at which the terminal device sends the layer 1 measurement report to the second network device, and the end moment of the first time period is the moment at which the terminal device sends the uplink data to the first network device, in this manner, the first time period occupies fewer resources, so that resource overheads can be reduced.

Optionally, if the first time period is [ton, toff], the first time period may alternatively be updated to [ton+*δ*₁, toff+*δ*₂], that is, a time offset may be added to the first time period. In this manner, a value of the first time period may be flexibly adjusted, so that the first network device can flexibly configure the time domain resource in the uplink grant for the terminal device.

It may be understood that the first time period may be obtained by the third network device through prediction based on location information of the terminal device, an ephemeris of the first network device, and the like.

The first time period is used by the first network device to determine the uplink grant for the terminal device, the time domain resource in the uplink grant is in the first time period, and the first time period is the time period in which the terminal device switches to the first network device. In this way, when the first network device determines the time domain resource in the uplink grant configured for the terminal device based on the first time period, the time domain resource reserved by the first network device for the terminal device occupies short time, so that a waste of resources can be reduced.

It may be understood that the fifth information includes the information indicating the first time period, so that the first network device can obtain the first time period based on the fifth information. For example, the fifth information includes the first time period, so that the first network device can directly learn of the first time period by using the fifth information.

A form of the fifth information is not limited in embodiments of this application. For example, the fifth information may be request information, or the fifth information may be an indication.

In an optional implementation, the third network device may send the fifth information by using a UE context setup request (UE CONTEXT SETUP REQUEST) sent to the first network device. The UE context setup request is used to require the first network device to join the candidate cell to perform L1/L2 switch. In other words, the fifth information may be carried in the UE context setup request. This manner can reduce signaling overheads.

It may be understood that the third network device sends the fifth information to the first network device to which the terminal device is to switch, to request the first network device to configure the uplink grant for the terminal device. This helps the terminal device switch to the first network device based on the uplink grant configured by the first network device for the terminal device when the terminal device needs to switch to the first network device, to reduce a switch delay. In addition, the fifth information includes the information indicating the first time period. This helps the first network device configure the time domain resource in the uplink grant for the terminal device based on the first time period, so that time occupied by the time domain resource in the uplink grant configured by the first network device for the terminal device can be reduced, that is, a waste of resources caused when the terminal device switches to the first network device can be reduced.

Optionally, the fifth information is sent by the third network device to the first network device through an F1 interface.

S602: The first network device sends first information to the third network device, where the first information indicates acknowledgment information that the first network device configures the uplink grant for the terminal device. Correspondingly, the third network device receives the first information from the first network device.

It may be understood that after receiving the fifth information from the third network device, the first network device determines whether to configure the uplink grant for the terminal device, and when determining to configure the uplink grant for the terminal device, sends the first information to the third network device, to notify the third network device of the acknowledgment information that the first network device configures the uplink grant for the terminal device.

A form of the first information is not limited in embodiments of this application. For example, the first information may be a request response used to feed back the fifth information. For another example, the first information may be another indication corresponding to the fifth information.

In an optional implementation, when the fifth information is carried in the UE context setup request, the first network device may send the first information by a UE context modification response (UE CONTEXT MODIFICATION RESPONSE) sent to the third network device. The UE context modification response is a reply from the first network device for the UE context setup request. In other words, the fifth information may be carried in the UE context setup request, and the first information may be carried in the UE context modification response. This manner can reduce signaling overheads.

S603: The third network device sends the first information. Correspondingly, the terminal device receives the first information.

It may be understood that the third network device sends the first information to the second network device, and then the second network device sends the first information to the terminal device. In this way, the terminal device receives the first information.

Any two or three pieces of the first information sent by the first network device to the third network device, the first information sent by the third network device to the second network device, and the first information sent by the second network device to the terminal device are in a same form or different forms. This is not limited in embodiments of this application. In addition, when a sending manner of other information in embodiments of this application is similar to that of the first information, a specific form of the information is not limited.

For example, after receiving the first information from the first network device, the third network device processes the first information to obtain processed first information #1, the third network device sends the processed first information #1 to the second network device, and then the second network device directly sends the first information #1 to the terminal device. In this manner, a form of the first information sent by the third network device to the first network device is different from that of the first information #1 sent by the third network device to the second network device, but both the first information and the first information #1 indicate the acknowledgment information that the first network device configures the uplink grant for the terminal device.

Optionally, the first information sent by the third network device to the second network device and the first information sent by the second network device to the terminal device may be carried in RRC reconfiguration information, so that signaling overheads are reduced.

In an optional implementation, the fifth information is further used to request to obtain a receive beam of the first network device. When the fifth information is further used to request to obtain the receive beam of the first network device, the first information further indicates the receive beam of the first network device. This manner helps the terminal device obtain the receive beam of the first network device, and further helps the terminal device determine, based on the receive beam of the first network device, a transmit beam used to send the uplink data to the first network device, thereby improving a success rate of receiving the uplink data from the terminal device by the first network device.

In another optional implementation, the fifth information is further used to request to obtain a transmit beam of the terminal device. When the fifth information is further used to request to obtain the transmit beam of the terminal device, the first information further indicates the transmit beam of the terminal device, and the transmit beam of the terminal device is determined by the first network device based on a receive beam of the first network device. This helps the terminal device send the uplink data to the first network device based on the transmit beam indicated by the first information, thereby improving a success rate of receiving the uplink data from the terminal device by the first network device.

S604: The terminal device determines, based on the first information, a first uplink grant configured by the first network device for the terminal device, where the first uplink grant includes a first time domain resource, and the first time domain resource is in the first time period.

After receiving the first information, the terminal device learns, by using the first information, that the first network device determines to configure the uplink grant for the terminal device. Further, the terminal device determines, based on the first information, the first uplink grant configured by the first network device for the terminal device.

It may be understood that the fifth information includes the information indicating the first time period, the first time period is used to determine the uplink grant for the terminal device, and the time domain resource in the uplink grant is in the first time period. In this way, the first network device determines the first time domain resource in the uplink grant based on the first time period, and the first time domain resource is in the first time period. Optionally, the first network device may further determine a frequency domain resource in the uplink grant based on the first time period.

Optionally, the first network device may further determine, based on information other than information in the first time period, content other than the first time domain resource in the uplink grant, for example, determine an MCS. In other words, the first network device may determine the uplink grant for the terminal device based on the first time period, and may further determine the uplink grant for the terminal device based on the information other than that in the first time period.

In an optional implementation, when determining to configure the uplink grant for the terminal device, the first network device configures the first uplink grant for the terminal device, and indicates, by using the first information, the first uplink grant configured for the terminal device. In other words, the first information further indicates the first uplink grant configured by the first network device for the terminal device. In this manner, the terminal device may obtain the first uplink grant by using the first information.

In another optional implementation, when determining to configure the uplink grant for the terminal device, the first network device does not configure the uplink grant for the terminal device temporarily, but configures the first uplink grant for the terminal device at a first moment, and indicates the first uplink grant to the terminal device by using fourth information. The first moment is later than or equal to the start moment of the first time period. In other words, the first network device sends the fourth information at the first moment, where the fourth information indicates the first uplink grant. In this manner, that the terminal device determines the first uplink grant configured by the first network device for the terminal device includes: receiving the fourth information, where the fourth information indicates the first uplink grant; and determining, based on the fourth information, the first uplink grant configured by the first network device for the terminal device. In other words, the terminal device may obtain the first uplink grant by using the received fourth information.

Optionally, the fourth information may be a PDCCH. That is, the first network device sends the PDCCH at the first moment later than or equal to the start moment of the first time period, where the PDCCH includes information indicating the first uplink grant. Correspondingly, the terminal device receives the PDCCH through blind detection, and obtains, from the PDCCH, the first uplink grant configured by the first network device for the terminal device.

A manner in which the first network device delivers the first uplink grant by using the fourth information may be understood as follows: The first network device enables the terminal device to obtain the first uplink grant in a dynamic grant (dynamic grant) manner.

It can be learned that the first time domain resource in the first uplink grant configured by the first network device for the terminal device is in the first time period, that is, the first time domain resource reserved by the first network device for the terminal device is in the first time period, and the first time period is time at which the terminal device switches to the first network device. In this way, the first time domain resource reserved by the first network device for the terminal device occupies short time, so that a waste of resources can be reduced.

S605: The terminal device switches to the first network device based on the first uplink grant.

It may be understood that the terminal device switches to the first network device based on the first uplink grant means that the terminal device switches to the first network device based on the first time domain resource in the first uplink grant, that is, sends the uplink data to the first network device based on the first time domain resource in the first uplink grant, to switch to the first network device. Optionally, the first uplink grant further includes a frequency domain resource and an MCS. In this case, the terminal device sends the uplink data to the first network device based on the first time domain resource, the frequency domain resource, and the MCS in the first uplink grant, to switch to the first network device.

An implementation in which the terminal device switches to the first network device based on the first uplink grant includes but is not limited to the following implementations.

Implementation a: The terminal device receives a cell switch command from the second network device, and sends the uplink data to the first network device based on the first uplink grant, to access the first network device.

It may be understood that before switching to the first network device based on the first uplink grant, the terminal device reports the layer 1 measurement report to the second network device. The layer 1 measurement report includes a plurality of measurement results obtained by the terminal device by measuring reference signals from candidate network devices. The second network device determines, based on the received layer 1 measurement report, whether the terminal device needs to switch to a network device. When determining that the terminal device needs to switch to the first network device, the second network device sends the cell switch command to the terminal device, where the cell switch command includes an identifier of the first network device. It can be learned that the second network device may indicate, by using the cell switch command, the terminal device to switch to the first network device.

Further, the terminal device receives the cell switch command from the second network device, and when receiving the cell switch command from the second network device, learns that the terminal device needs to switch to the first network device. In this case, the terminal device sends the uplink data to the first network device based on the first uplink grant configured by the first network device for the terminal device, that is, performs RACH-less on the first network device, to access the first network device. The first time domain resource in the first uplink grant used by the terminal device to send the uplink data to the first network device is in the first time period, and the first time period is the time period in which the terminal device switches to the first network device. In this way, the first time domain resource occupies short time, so that a waste of resources caused when the terminal device switches to the first network device can be reduced.

In an optional implementation, the first network device sends a first indication when a third condition is met, where the first indication indicates that the first network device has activated the first uplink grant. Correspondingly, before switching to the first network device based on the first uplink grant or before sending the uplink data to the first network device based on the first uplink grant, the terminal device receives the first indication, and learns, by using the first indication, that the first uplink grant configured by the first network device for the terminal device has been activated.

Optionally, the first network device does not send a first indication when a third condition is not met.

The third condition is that current time is in the first time period; or the third condition is that a distance between the terminal device and the first network device is less than or equal to a first preset value, and/or a distance between the terminal device and the second network device is greater than a second preset value. For example, the third condition is that a distance between the terminal device and a satellite in which the first network device is located is less than *α*₁. For another example, the third condition is that a distance between the terminal device and a satellite in which the second network device is located is greater than *α*₂. For another example, the third condition is that a distance between the terminal device and a location of the first network device is less than *α*₁, and a distance between the terminal device and a satellite in which the second network device is located is greater than *α*₂.

In other words, when the current time is in the first time period, the first network device notifies, by using the first indication, the terminal device that the first uplink grant has been activated by the first network device. Alternatively, when the distance between the terminal device and the first network device is less than or equal to the first preset value, and/or the distance between the terminal device and the second network device is greater than the second preset value, the first network device notifies, by using the first indication, the terminal device that the first uplink grant has been activated by the first network device.

Alternatively, it may be understood as follows: When the current time is in the first time period, the first network device activates the first uplink grant configured for the terminal device, and notifies, by using the first indication, the terminal device that the first uplink grant has been activated by the first network device; or when the distance between the terminal device and the first network device is less than or equal to the first preset value, and/or the distance between the terminal device and the second network device is greater than the second preset value, the first network device activates the first uplink grant configured for the terminal device, and notifies, by using the first indication, the terminal device that the first uplink grant has been activated by the first network device.

When a current moment is in the first time period, it indicates that the terminal device enters a phase of performing switch to the first network device, and the terminal device is to switch to the first network device. In this case, the first network device determines to activate the first uplink grant configured for the terminal device, so that the first uplink grant can be used by the terminal device. When the distance between the terminal device and the first network device is less than or equal to the first preset value, and/or the distance between the terminal device and the second network device is greater than the second preset value, it indicates that the satellite in which the first network device is located is to provide a service for the terminal device, that is, the terminal device is to switch to the first network device. In this case, the first network device activates the first uplink grant configured for the terminal device, so that the first uplink grant can be used by the terminal device.

Optionally, the terminal device further reports the location information of the terminal device to the third network device via the second network device, so that the third network device determines the distance between the terminal device and the second network device, and/or determines the distance between the terminal device and the first network device. In this way, the third network device may notify the first network device of the determined distance, so that the first network device determines, based on the distance between the terminal device and the second network device and/or the distance between the terminal device and the first network device, whether to activate the first uplink grant configured for the terminal device.

Optionally, the third condition may alternatively be that an elevation angle between the terminal device and the first network device is greater than a third preset value, and/or an elevation angle between the terminal device and the second network device is less than a fourth preset value. The elevation angle between the terminal device and the first network device may be understood as an elevation angle of the terminal device relative to the first network device. The elevation angle between the terminal device and the second network device is similar to that between the terminal device and the first network device. Details are not described again. For example, an elevation angle between the terminal device and a satellite in which the first network device is located is greater than *θ*₁, and/or an elevation angle between the terminal device and a satellite in which the second network device is located is less than *θ*₂. In other words, the first network device may alternatively determine, based on the elevation angle between the terminal device and the first network device and/or the second network device, whether to activate the first uplink grant.

Optionally, the third condition may alternatively be that a depression angle between the terminal device and the first network device is less than a ninth preset value, and/or a depression angle between the terminal device and the second network device is greater than a tenth preset value. The depression angle between the terminal device and the first network device is a depression angle of the first network device relative to the terminal device. The depression angle between the terminal device and the second network device is similar to that between the terminal device and the first network device. Details are not described again.

Optionally, the third condition may alternatively be that remaining service time of the second network device for the terminal device is less than a fifth preset value. Optionally, the third condition may alternatively be that remaining coverage time of a satellite in which the second network device is located for the terminal device is less than a sixth preset value. It can be learned that the first network device may alternatively determine, based on the remaining service time of the second network device for the terminal device or the remaining coverage time of the second network device for the terminal device, whether to activate the first uplink grant. The remaining service time of the second network device for the terminal device and the remaining coverage time of the second network device for the terminal device may be autonomously determined by the first network device, or may be determined by the third network device, and then the third network device notifies the first network device of the remaining service time of the second network device for the terminal device and the remaining coverage time of the second network device for the terminal device. Optionally, the third condition may alternatively be that remaining serving time of the first network device for the terminal device is less than a seventh preset value. Optionally, the third condition may alternatively be that remaining coverage time of a satellite in which the first network device is located for the terminal device is less than an eighth preset value. Optionally, the third condition may alternatively be that remaining service time of the second network device for the terminal device is less than a fifth preset value, and remaining service time of the first network device for the terminal device is less than a seventh preset value. Optionally, the third condition may alternatively be that remaining coverage time of a satellite in which the second network device is located for the terminal device is less than a sixth preset value, and remaining coverage time of a satellite in which the first network device is located for the terminal device is less than an eighth preset value.

In addition, that the first network device sends the first indication when the third condition is met may be understood as follows: When the third condition is met, the first network device sends the first indication to the third network device, the third network device sends the first indication to the second network device, and the second network device sends the first indication to the terminal device. In this way, the terminal device receives the first indication, and learns, by using the first indication, that the first network device has activated the first uplink grant. Further, the terminal device receives the cell switch command from the second network device, and sends the uplink data to the first network device based on the activated first uplink grant, to access the first network device.

In another optional implementation, the terminal device may determine, without receiving the first indication, that the first uplink grant has been activated by the first network device. The terminal device may autonomously determine whether the first uplink grant has been activated by the first network device. Specifically, when the current time is later than the first time period, the terminal device determines that the first uplink grant has been activated by the first network device. Optionally, when the third condition is met, the terminal device determines that the first uplink grant has been activated by the first network device. For example, when the distance between the terminal device and the first network device is less than or equal to the first preset value, and/or the distance between the terminal device and the second network device is greater than the second preset value, the terminal device determines that the first uplink grant has been activated by the first network device. In this way, when receiving the cell switch command from the second network device, the terminal device sends the uplink data to the first network device based on the activated first uplink grant. Optionally, when the third condition is not met, the terminal device determines that the first uplink grant is not activated by the first network device.

Optionally, in a manner in which the terminal device determines, when the current time is later than the first time period, that the first uplink grant has been activated by the first network device, the third network device further notifies the terminal device of the first time period. For example, the third network device notifies, by using the RRC reconfiguration message, the terminal device of the first time period corresponding to the first network device.

It may be understood that, in the manner in which the terminal device autonomously determines whether the first uplink grant has been activated by the first network device, the first network device determines, in a same manner as the terminal device, whether the first uplink grant has been activated. In this way, the terminal device and the first network device can align whether the first uplink grant has been activated. Further, when the terminal device sends the uplink data to the first network device based on the first uplink grant, the first network device also receives the uplink data from the terminal device based on the first uplink grant.

Implementation b: The terminal device sends second information when a first condition is met, where the second information is used to request to activate the first uplink grant configured by the first network device for the terminal device, and the first condition is that signal quality corresponding to the first network device is higher than signal quality corresponding to the second network device by a first threshold; the terminal device receives third information, where the third information indicates that the first network device has activated the first uplink grant; and when a second condition is met, the terminal device sends the uplink data to the first network device based on the first uplink grant, to access the first network device, where the second condition is that the signal quality corresponding to the first network device is higher than the signal quality corresponding to the second network device by a second threshold.

The second threshold is greater than the first threshold. The signal quality corresponding to the first network device may be understood as signal quality obtained by the terminal device by measuring a reference signal received from the first network device. The signal quality corresponding to the second network device may be understood as signal quality obtained by the terminal device by measuring a reference signal received from the second network device. Optionally, when the first network device is located in a neighboring cell of the terminal device, and the second network device is located in a serving cell of the terminal device, the signal quality corresponding to the first network device is signal quality obtained by the terminal device by measuring a signal of the neighboring cell, and the signal quality corresponding to the second network device is signal quality obtained by the terminal device by measuring a signal of the serving cell.

In addition, that the signal quality corresponding to the first network device is higher than the signal quality corresponding to the second network device by the first threshold may be considered as a first A3 event, and that the signal quality corresponding to the first network device is higher than the signal quality corresponding to the second network device by the second threshold may be considered as a second A3 event.

When the first A3 event is met, the terminal device determines that the terminal device may switch to the first network device, to request, by using the second information, the first network device to activate the first uplink grant, to obtain the available first uplink grant. After receiving the second information, the first network device activates the first uplink grant, and notifies, by using the third information, that the first uplink grant has been activated. In this way, when the second A3 event is met, the terminal device determines that the terminal device needs to switch to the first network device, and then sends the uplink data to the first network device based on the activated first uplink grant, to access the first network device. It can be learned that before the second A3 event is met, the terminal device obtains, by using the first A3 event, the first uplink grant configured by the first network device for the terminal device and that has been activated. Therefore, when the second A3 event is met, the terminal device may directly switch to the first network device by using the first uplink grant, to reduce a switch delay of the terminal device for performing access switch to the first network device.

Correspondingly, the third network device receives the second information, and sends the second information to the first network device; the first network device receives the second information from the third network device, and sends the third information to the third network device; and the third network device receives the third information from the first network device, and sends the third information.

To be specific, when the first condition is met, the terminal device sends the second information to the second network device, the second network device sends the second information to the third network device, and the third network device sends the second information to the first network device, so that the first network device learns that the terminal device requests to activate the first uplink grant. After activating the first uplink grant, the first network device sends the third information to the third network device, the third network device sends the third information to the second network device, and the second network device sends the third information to the terminal device, so that the terminal device learns that the first uplink grant has been activated by the first network device.

In an optional implementation, the third network device sends the first threshold and the second threshold that correspond to the first network device. Correspondingly, the terminal device receives the first threshold and the second threshold that correspond to the first network device. Specifically, the third network device sends, to the second network device, the first threshold and the second threshold that correspond to the first network device, and the second network device sends, to the terminal device, the first threshold and the second threshold that correspond to the first network device. The first threshold and the second threshold that correspond to the first network device may be understood as that the first threshold and the second threshold are two thresholds required when the terminal device switches to the first network device, that is, two thresholds respectively used in the first condition and the second condition when the terminal device switches to the first network device.

In other words, the third network device configures, for the terminal device, the first threshold and the second threshold that are required when the terminal device performs conditional handover to the first network device. In this way, the terminal device may determine, based on the first threshold, the second threshold, the first condition, and the second condition, how to perform conditional handover to the first network device.

Optionally, events in the first condition and the second condition may be A4 events. Optionally, events in the first condition and the second condition may be A5 events. Optionally, two events in the first condition and the second condition may be any two of an A3 event, an A4 event, and an A5 event. Types of the events in the first condition and the second condition are not limited in embodiments of this application.

For example, the first condition is that the signal quality corresponding to the first network device is higher than a threshold 1, and the second condition is that the signal quality corresponding to the first network device is higher than a threshold 2, where the threshold 2 is greater than the threshold 1. In other words, each of events in the first condition and the second condition is the A4 event. For another example, the first condition is that the signal quality corresponding to the second network device is lower than a threshold 3, and the signal quality corresponding to the first network device is higher than a threshold 4, and the second condition is that the signal quality corresponding to the second network device is lower than a threshold 5, and the signal quality corresponding to the first network device is higher than a threshold 6. In other words, each of events in the first condition and the second condition is the A5 event. For another example, the first condition is that the signal quality corresponding to the first network device is higher than signal quality corresponding to the serving cell by the first threshold, and the second condition is that the signal quality corresponding to the first network device is higher than a threshold 1. In other words, an event in the first condition is the A3 event, and an event in the second condition is the A4 event. For another example, the first condition is that the signal quality corresponding to the first network device is higher than signal quality corresponding to the serving cell by the first threshold, and the second condition is that the signal quality corresponding to the second network device is lower than a threshold 5, and the signal quality corresponding to the first network device is higher than a threshold 6. In other words, an event in the first condition is the A3 event, and an event in the second condition is the A5 event. For another example, the first condition is that the signal quality corresponding to the first network device is higher than the threshold 1, the second condition is that the signal quality corresponding to the second network device is lower than a threshold 5, and the signal quality corresponding to the first network device is higher than a threshold 6. In other words, an event in the first condition is the A4 event, and an event in the second condition is the A5 event.

Optionally, an A1 event and/or an A2 event may be added to the first condition and the second condition.

It may be understood that, in the first condition and the second condition, signal quality of an event may be an L1 measurement quantity or an L3 measurement quantity. To be specific, the signal quality corresponding to the first network device and the signal quality corresponding to the second network device may be obtained by the terminal device through L1 measurement, or may be obtained by the terminal device through L3 measurement.

Optionally, when the first condition is not met, the terminal device does not send the second information, in other words, does not perform the implementation b. Optionally, when the second condition is not met, the terminal device does not send the uplink data to the first network device based on the first uplink grant, in other words, the terminal device does not switch to the first network device.

Implementation c: The terminal device sends second information when a first condition is met, where the second information is used to request to activate the first uplink grant configured by the first network device for the terminal device, and the first condition is that signal quality corresponding to the first network device is higher than signal quality corresponding to the second network device by a first threshold; the terminal device receives third information, where the third information indicates that the first network device has activated the first uplink grant; and when receiving a cell switch command from the second network device, the terminal device sends the uplink data to the first network device based on the first uplink grant, to access the first network device.

Compared with the implementation b, in the implementation c, the terminal device does not determine, based on whether the second condition is met, whether to switch to the first network device based on the first uplink grant, but determines, based on whether the cell switch command from the second network device is received, whether to switch to the first network device based on the first uplink grant.

That is, when the first A3 event is met, the terminal device determines that the terminal device may switch to the first network device, to request, by using the second information, the first network device to activate the first uplink grant, to obtain the available first uplink grant. After receiving the second information, the first network device activates the first uplink grant, and notifies, by using the third information, that the first uplink grant has been activated. In this way, when receiving the cell switch command from the second network device, the terminal device may directly send the uplink data to the first network device based on the activated first uplink grant, to access the first network device.

It can be learned that, in this implementation, before receiving the cell switch command from the second network device, the terminal device also obtains the first uplink grant that is configured by the first network device for the terminal device and that has been activated. In this way, when receiving the cell switch command from the second network device, the terminal device may directly switch to the first network device based on the first uplink grant, to reduce a switch delay of the terminal device for performing access switch to the first network device.

Optionally, for another optional manner in the implementation c, refer to the descriptions in the implementation b. Details are not described again. For example, in the implementation c, an event in the first condition may be the A4 event or the A5 event.

Optionally, when the first condition is not met, the terminal device does not send the second information, in other words, does not perform the implementation c.

In an optional implementation, the terminal device performs the implementation b or the implementation c when current time is later than or equal to the start moment of the first time period. In other words, the terminal device determines, based on the first time period, whether to start to perform the implementation b or the implementation c. Optionally, the terminal device determines, based on a distance between the terminal device and the first network device and/or a distance between the terminal device and the first network device, whether to start to perform the implementation b or the implementation c. For example, when the distance between the terminal device and the first network device is less than or equal to the first preset value, and/or the distance between the terminal device and the second network device is greater than the second preset value, the terminal device determines to perform the implementation b. It can be learned that the terminal device can perform both time-based conditional handover and geographical location-based conditional handover.

Optionally, when the elevation angle between the terminal device and the first network device is greater than the third preset value, and/or the elevation angle between the terminal device and the second network device is less than the fourth preset value, the terminal device performs the implementation b or the implementation c. Optionally, when the remaining service time of the second network device for the terminal device is less than the fifth preset value, and/or the remaining service time of the first network device for the terminal device is less than the seventh preset value, the terminal device performs the implementation b or the implementation c. Optionally, when the remaining coverage time of the satellite in which the second network device is located for the terminal device is less than the sixth preset value, and/or the remaining coverage time of the satellite in which the first network device is located for the terminal device is less than the eighth preset value, the terminal device performs the implementation b or the implementation c. Optionally, when the depression angle between the terminal device and the first network device is less than the ninth preset value, and/or the depression angle between the terminal device and the second network device is greater than the tenth preset value, the terminal device performs the implementation b or implementation c.

Specific forms of the second information and the third information exchanged between the devices are not limited in embodiments of this application. However, content requested by the second information exchanged between the devices is the same, and content indicated by the third information exchanged between the devices is also the same.

It can be learned that, in this embodiment of this application, the third network device requests, by using the fifth information, the first network device to configure the uplink grant for the terminal device. The first network device indicates, by using the first information, the acknowledgment information that the first network device configures the uplink grant for the terminal device. The terminal device determines, based on the first information, the first uplink grant configured by the first network device for the terminal device, and sends the uplink data to the first network device based on the first uplink grant, to access the first network device. The fifth information includes the information indicating a first time period. The first time period is the time period in which the terminal device switches to the first network device, and the time domain resource in the uplink grant is in the first time period. In this way, a first time domain resource in the first uplink grant configured by the first network device for the terminal device based on the first time period is in the first time period, so that the first time domain resource occupies short time, in other words, the first network device reserves a small quantity of time domain resources for the terminal device in advance, thereby reducing a waste of resources. This improves resource utilization.

In addition, before switching to the first network device, the terminal device obtains the first uplink grant configured by the first network device for the terminal device. In this case, when the terminal device needs to switch to the first network device, the terminal device may directly switch to the first network device by using the obtained first uplink grant, to reduce a delay of the terminal device for switching to the first network device.

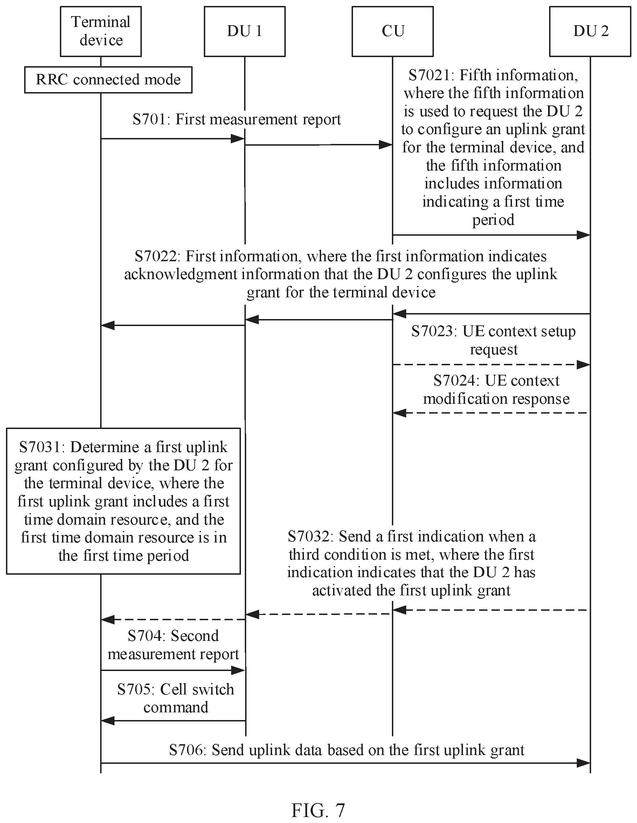

The following describes the access switch method 100 by using an example in which the first network device is a DU 2, the second network device is a DU 1, the third network device is a CU, the DU 1 is a DU deployed in a satellite that currently serves the terminal device, the DU 2 is a DU deployed in a target satellite to which the terminal device is to perform access switch, the CU is a terrestrial base station, and when receiving a cell switch command from the second network device, the first network device switches to the first network device based on a first uplink grant configured by the first network device for the terminal device. FIG. 7 shows an interaction procedure between the terminal device, the DU 1, the DU 2, and the CU. As shown in FIG. 7, the interaction procedure includes but is not limited to the following steps.

S701: The terminal device sends a first measurement report. Correspondingly, the CU receives the first measurement report.

It may be understood that the CU configures a layer 3 measurement (L3 measurement) configuration for the terminal device. The terminal device in a connected mode performs measurement based on the layer 3 measurement configuration, to obtain the first measurement report. In other words, the first measurement report is an L3 measurement report. Optionally, the first measurement report includes user information of the terminal device, where the user information may include location information and motion status information of the terminal device.

That the terminal device sends the first measurement report may be understood as follows: The terminal device sends the first measurement report to the DU 1, and then the DU 1 sends the first measurement report to the CU. Further, the CU receives the first measurement report.

S7021: The CU sends fifth information to the DU 2, where the fifth information is used to request the DU 2 to configure an uplink grant for the terminal device, and the fifth information includes information indicating a first time period. Correspondingly, the DU 2 receives the fifth information from the CU.

The first time period is the time period in which the terminal device switches to the DU 2. For example, the first time period is a time period in which the terminal device performs LTM to the DU 2, for example, [ton, toff], where ton is a moment at which the terminal device sends a layer 1 measurement report (L1 measurement report) to the DU 1, and toff is a moment at which the terminal device sends uplink data to the DU 2.

It may be understood that after receiving the first measurement report, the CU determines, based on motion trajectories of a plurality of DUs (namely, a plurality of satellites on which the plurality of DUs are deployed) and the motion status information (a location, a motion speed and direction, and the like) of the terminal device, a DU sequence in which the terminal device subsequently performs switch a plurality of times, and predicts a time period in which the terminal device switches to each DU. In this way, the CU sends, in advance, the fifth information to a target DU to which the terminal device is to perform access switch. For example, the CU sends the fifth information to the DU 2 to which the terminal device is to perform access switch. The fifth information includes the first time period corresponding to the DU 2. The first time period corresponding to the DU 2 is a time period in which the terminal device switches to the DU 2.

Optionally, when determining that the terminal device is to switch to the DU 2 in a time period closest to current time, the CU sends, to the DU 2, the fifth information used to request the DU 2 to configure the uplink grant for the terminal device. The fifth information includes the first time period corresponding to the DU 2, and the first time period corresponding to the DU 2 is a time period in which the terminal device switches to the DU 2. In the manner in which the CU sends the fifth information to the DU 2, the DU 2 may configure a time domain resource in the uplink grant for the terminal device based on the first time period corresponding to the DU 2.

It can be learned that the CU may request, by using the fifth information, the DU 2 to configure the uplink grant for the terminal device, so that the terminal device subsequently switches to the DU 2 based on the uplink grant configured by the DU 2 for the terminal device. In addition, the fifth information includes the first time period, and the first time period is the time period in which the terminal device switches to the DU 2. This helps the DU 2 determine, based on the first time period, the time domain resource in the uplink grant configured for the terminal device, thereby reducing time occupied by time domain resources reserved by the DU 2 for the terminal device, and reducing a waste of resources.

S7022: The DU 2 sends first information, where the first information indicates acknowledgment information that the DU 2 configures the uplink grant for the terminal device. Correspondingly, the terminal device receives the first information.

After receiving the fifth information from the CU, the DU 2 determines whether to configure the uplink grant for the terminal device. When determining to configure the uplink grant for the terminal device, the DU 2 sends the first information, and indicates, by using the first information, the acknowledgment information that the DU 2 configures the uplink grant for the terminal device.

That the DU 2 sends the first information may be understood as follows: The DU 2 sends the first information to the CU, the CU sends the first information to the DU 1, and the DU 1 sends the first information to the terminal device, so that the terminal device learns of the acknowledgment information that the DU 2 configures the uplink grant for the terminal device.

Optionally, the fifth information sent by the CU to the DU 2 may be an uplink grant reservation request, and the first information sent by the DU 2 to the CU may be an uplink grant reservation response. The uplink grant reservation request is used to request the DU 2 to configure the uplink grant for the terminal device, and the uplink grant reservation response indicates the acknowledgment information that the DU 2 configures the uplink grant for the terminal device.

Optionally, the CU may further perform S7023. To be specific, the CU may send a UE context setup request to the DU 2. Correspondingly, the DU 2 may further perform S7024. To be specific, the DU 2 may send a UE context modification response to the CU. Optionally, the fifth information is carried in the UE context setup request, and the first information may be carried in the UE context modification response, to reduce signaling overheads. For example, the uplink grant reservation request is carried in the UE context setup request, and the uplink grant reservation request response is carried in the UE context modification response. Optionally, user location information and the motion status information of the terminal device are carried in the UE context setup request. Optionally, the user location information and the motion status information of the terminal device are carried in the fifth information.

Optionally, the CU further sends an L1/L2 switch configuration to the terminal device by using an RRC reconfiguration message, where the L1/L2 switch configuration includes a target DU configuration list and a time period corresponding to each of a plurality of target DUs. After receiving the RRC reconfiguration message carrying the L1/L2 switch configuration, the terminal device stores the L1/L2 switch configuration, and returns an RRC reconfiguration complete message to the CU by using another field of RRC Reconfiguration.

Optionally, the first information sent by the CU to the terminal device may be carried in the RRC reconfiguration message, to reduce signaling overheads.

Optionally, the fifth information is further used to request to obtain a receive beam of the DU 2, or is further used to request to obtain a transmit beam of the terminal device. In this manner, for implementations of the fifth information and the first information, refer to the descriptions in S603. Details are not described again.

S7031: The terminal device determines, based on the first information, the first uplink grant configured by the DU 2 for the terminal device, where the first uplink grant includes a first time domain resource, and the first time domain resource is in the first time period.

It may be understood that the terminal device learns, based on the first information, that the DU 2 determines to configure the uplink grant for the terminal device, to determine the first uplink grant configured by the DU 2 for the terminal device.

In an optional implementation, the first information further indicates the first uplink grant configured by the DU 2 for the terminal device. In this manner, the terminal device determines, based on the first information, the first uplink grant configured by the DU 2 for the terminal device.

In another optional implementation, after entering a start moment of the first time period, for example, entering a moment ton, the DU 2 configures the first uplink grant for the terminal device, and sends fourth information. The fourth information indicates the first uplink grant. Correspondingly, the terminal device receives the fourth information, and determines the first uplink grant based on the fourth information. Optionally, the fourth information may be a PDCCH.

It may be understood that the first uplink grant configured by the DU 2 for the terminal device includes the first time domain resource, and the first time domain resource is in the first time period. In this way, the first time domain resource reserved by the DU 2 for the terminal device occupies short time, so that a waste of resources can be reduced.

S704: The terminal device sends a second measurement report to the DU 1. Correspondingly, the DU 1 receives the second measurement report from the terminal device.

The terminal device performs L1 measurement based on the L1/L2 switch configuration delivered by the CU, to obtain the second measurement report of L1, and sends the second measurement report to the DU 1. The terminal device sends the second measurement report to the DU 1, so that the DU 1 determines whether the terminal device needs to switch to the target DU, for example, determines whether the terminal device needs to switch to the DU 2.

S705: The DU 1 sends the cell switch command to the terminal device. Correspondingly, the terminal device receives the cell switch command from the DU 1.

It may be understood that the DU 1 sends the cell switch command to the terminal device when determining, based on the second measurement report, that the terminal device needs to switch to the DU 2. The cell switch command includes an identifier of the DU 2, and the cell switch command is used to indicate the terminal device to switch to the DU 2.

S706: The terminal device sends the uplink data to the DU 2 based on the first uplink grant. Correspondingly, the DU 2 receives the uplink data from the terminal device based on the first uplink grant.

When receiving the cell switch command from the DU 1, the terminal device learns that the terminal device needs to switch to the DU 2. In this case, the terminal device sends the uplink data to the DU 2 based on the first uplink grant configured by the DU 2 for the terminal device. For example, when receiving the cell switch command from the DU 2, the terminal device sends the uplink data to the DU 2 based on the first time domain resource and a frequency domain resource that are in the first uplink grant, to access the DU 2.

Optionally, before receiving the uplink data from the terminal device based on the first uplink grant, the DU 2 may further perform S7032. To be specific, the DU 2 sends a first indication when a third condition is met, where the first indication indicates that the DU 2 has activated the first uplink grant. In this way, the terminal device receives the first indication, and learns, by using the first indication, that the first uplink grant has been activated. Further, when receiving the cell switch command from the DU 1, the terminal device may send the uplink data to the DU 2 based on the activated first uplink grant. For the third condition, refer to the descriptions in the access switch method 100. Details are not described again. Optionally, the DU 2 does not send a first indication when a third condition is not met.

Optionally, when the DU 2 does not send the first indication indicating that the DU 2 has activated the first uplink grant, that is, when the terminal device receives no first indication, the terminal device may autonomously determine whether the first uplink grant has been activated. The terminal device may autonomously determine, based on whether the third condition is met, whether the first uplink grant has been activated. When the third condition is met, the terminal device determines that the first uplink grant has been activated. Further, when receiving the cell switch command from the DU 1, the terminal device may alternatively send the uplink data to the DU 2 based on the activated first uplink grant.

Optionally, after the terminal device successfully accesses the DU 2, the DU 2 may notify, via access success (ACCESS SUCCESS) signaling, the CU that the terminal device has successfully accessed the DU 2. In this way, data sending/receiving between the terminal device and the DU 2 does not need to be performed through data forwarding between the DU 1 and the CU, and the terminal device and the DU 2 can directly communicate with each other.

Optionally, the CU sends the fifth information to a plurality of candidate DUs of the terminal device, and the fifth information sent to each of the plurality of candidate DUs is used to request the candidate DU to configure the uplink grant for the terminal device. The plurality of DUs include the DU 2. The terminal device learns, by using the first information fed back by each candidate DU, that each of the plurality of candidate DUs determines to configure the uplink grant for the terminal device. In this way, after switches to the DU 2, the terminal device may further perform consecutive LTM to access a candidate DU other than the DU 2 in the plurality of candidate DUs. In addition, after completing each time of switch, the terminal device may delete a configuration related to a source cell/DU.

It can be learned that the CU requests, by using the fifth information, the DU 2 to configure the uplink grant for the terminal device. The DU 2 indicates, by using the first information, the acknowledgment information that the DU 2 configures the uplink grant for the terminal device. The terminal device determines the first uplink grant configured by the DU 2 for the terminal device, and when receiving the cell switch command from the DU 1, sends the uplink data to the DU 2 based on the first uplink grant, to access the DU 2. The first time domain resource in the first uplink grant used when the terminal device switches to the DU 2 is in the first time period. The first time period is the time period in which the terminal device switches to the DU 2. This can reduce a waste of resources caused when the terminal device switches to the DU 2. In addition, before receiving the cell switch command, the terminal device obtains the first uplink grant used for switching to the DU 2, to reduce a delay of the terminal device for switching to the DU2.

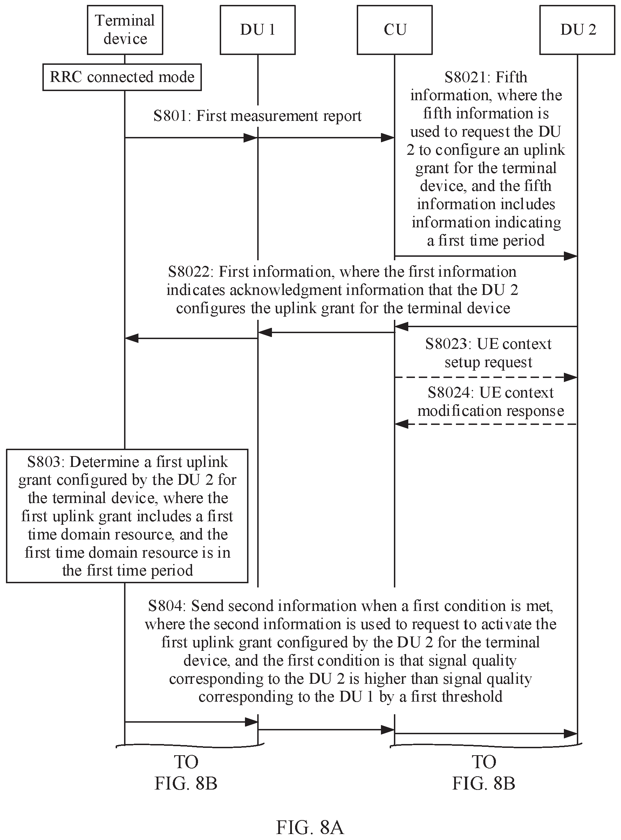

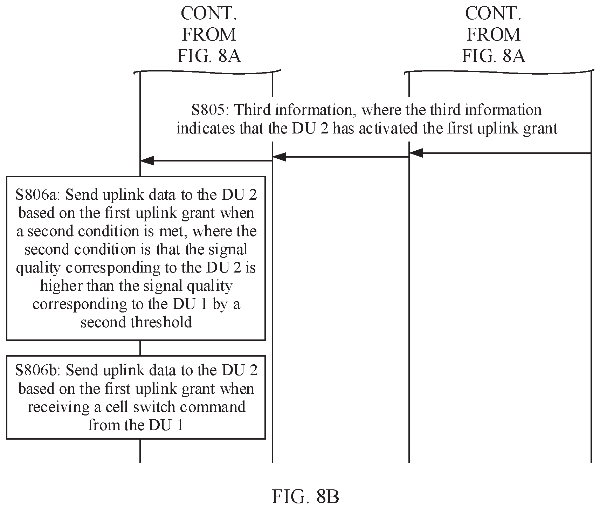

The following describes the access switch method 100 by using an example in which the first network device is a DU 2, the second network device is a DU 1, the third network device is a CU, the DU 1 is a DU deployed in a satellite that currently serves the terminal device, the DU 2 is a DU deployed in a target satellite to which the terminal device is to perform access switch, the CU is a terrestrial base station, and when a first condition is met and a second condition is met, the first network device switches to the first network device based on a first uplink grant configured by the first network device for the terminal device. FIG. 8A and FIG. 8B show an interaction procedure between the terminal device, the DU 1, the DU 2, and the CU. As shown in FIG. 8A and FIG. 8B, the interaction procedure includes but is not limited to the following steps.

S801: The terminal device sends a first measurement report. Correspondingly, the CU receives the first measurement report.

S8021: The CU sends fifth information to the DU 2, where the fifth information is used to request the DU 2 to configure an uplink grant for the terminal device, and the fifth information includes information indicating a first time period. Correspondingly, the DU 2 receives the fifth information from the CU.

S8022: The DU 2 sends first information, where the first information indicates acknowledgment information that the DU 2 configures the uplink grant for the terminal device.

Optionally, the CU may further perform S8023, and the DU 2 may further perform S8024. For implementations thereof, refer to the foregoing descriptions. Details are not described again.

Optionally, the fifth information is further used to request to obtain a receive beam of the DU 2, or is further used to request to obtain a transmit beam of the terminal device. In this manner, for implementations of the fifth information and the first information, refer to the descriptions in S603. Details are not described again.

S803: The terminal device determines, based on the first information, a first uplink grant configured by the DU 2 for the terminal device, where the first uplink grant includes a first time domain resource, and the first time domain resource is in the first time period.

In this embodiment of this application, for implementations of S801 to S803, refer to the implementations of S701 to S703. Details are not described again.

S804: The terminal device sends second information when the first condition is met, where the second information is used to request to activate the first uplink grant configured by the DU 2 for the terminal device, and the first condition is that signal quality corresponding to the DU 2 is higher than signal quality corresponding to the DU 1 by a first threshold. Correspondingly, the DU 2 receives the second information.

When the signal quality corresponding to the DU 2 is higher than the signal quality corresponding to the DU 1 by the first threshold, it indicates that the DU 2 may enter a service area of the terminal device, that is, the terminal device may switch from the DU 1 to the DU 2. In this way, when the first condition is met, the terminal device sends the second information, to request the DU 2 to activate the first uplink grant configured for the terminal device. This helps the terminal device subsequently switch to the DU 2 based on the activated first uplink grant.

That the terminal device sends the second information when the first condition is met may be understood as follows: When the first condition is met, the terminal device sends the second information to the DU 1, the DU 1 sends the second information to the CU, and the CU sends the second information to the DU 2, so that the DU 2 obtains the second information sent by the terminal device.

Optionally, when the first condition is not met, the terminal device does not send the second information, and therefore does not perform steps after S804.

S805: The DU 2 sends third information, where the third information indicates that the DU 2 has activated the first uplink grant. Correspondingly, the terminal device receives the third information.

It may be understood that after receiving the second information, the DU 2 activates the first uplink grant configured for the terminal device, and sends the third information, to indicate, by using the third information, that the DU 2 has activated the first uplink grant.

That the DU 2 sends the third information may be understood as follows: The DU 2 sends the third information to the CU, the CU sends the third information to the DU 1, and the DU 1 sends the third information to the terminal device, so that the terminal device learns that the first uplink grant has been activated by the DU 2.

S806a: The terminal device sends uplink data to the DU 2 based on the first uplink grant when the second condition is met, where the second condition is that the signal quality corresponding to the DU 2 is higher than the signal quality corresponding to the DU 1 by a second threshold.

The second threshold is greater than the first threshold, and the first threshold and the second threshold are configured by the CU for the terminal device.

When the signal quality corresponding to the DU 2 is higher than the signal quality corresponding to the DU 1 by the second threshold, the terminal device switches from the DU 1 to the DU 2. In this way, when the second condition is met, the terminal device sends the uplink data to the DU 2 based on the activated first uplink grant, to access the DU 2.

Optionally, events in the first condition and the second condition may be A4 events, A5 events, or any two of an A3 event, an A4 event, and an A5 event. For a specific implementation thereof, refer to the descriptions in the access switch method 100. Details are not described again.

Optionally, when the second condition is not met, the terminal device does not perform the step of sending the uplink data to the DU 2 based on the first uplink grant, in other words, does not switch to the DU 2.

S806b: The terminal device sends uplink data to the DU 2 based on the first uplink grant when receiving a cell switch command from the DU 1.

In other words, the terminal device may not determine, based on whether the second condition is met, whether to send the uplink data to the DU 2. When receiving the cell switch command from the DU 1, the terminal device sends the uplink data to the DU 2 based on the activated first uplink grant.

In this manner, the terminal device further sends a layer 1 measurement report to the DU 1; the DU 1 determines, based on the layer 1 measurement report from the terminal device, whether the terminal device needs to switch to the DU 2; and when determining that the terminal device needs to switch to the DU 2, the DU 1 sends the cell switch command to the terminal device, to indicate the terminal device to switch to the DU 2.

It may be understood that the terminal device performs S806a or S806b, to switch to the first network device.

Optionally, after the terminal device successfully accesses the DU 2, the DU 2 may notify, via access success signaling, the CU that the terminal device has successfully accessed the DU 2. For an implementation thereof, refer to the descriptions in the access switch method shown in FIG. 7. Details are not described again.

Optionally, after completing switch to the DU2, the terminal device may further perform consecutive LTM switch. For an implementation thereof, refer to the descriptions in the access switch method shown in FIG. 7. Details are not described again.

It can be learned that the CU requests, by using the fifth information, the DU 2 to configure the uplink grant for the terminal device. The DU 2 indicates, by using the first information, the acknowledgment information that the DU 2 configures the uplink grant for the terminal device. The terminal device determines, based on the first information, the first uplink grant configured by the DU 2 for the terminal device; when the first condition is met, requests, by using the second information, the DU 2 to activate the first uplink grant; and when the second condition is met, sends the uplink data to the DU 2 based on the activated first uplink grant, to access the DU 2. The first time domain resource included in the first uplink grant is in the first time period, so that time domain resources reserved by the DU 2 for the terminal device can be reduced, thereby reducing a waste of resources. In addition, before the second condition is met, the terminal device has determined the first uplink grant that is configured by the DU 2 for the terminal device and that has been activated. In this way, when the second condition is met, the terminal device may directly send the uplink data to the DU 2 based on the activated first uplink grant, to reduce a switch delay of the terminal device for switching to the DU 2.

Alternatively, the CU requests, by using the fifth information, the DU 2 to configure the uplink grant for the terminal device. The DU 2 indicates, by using the first information, the acknowledgment information that the DU 2 configures the uplink grant for the terminal device. The terminal device determines, based on the first information, the first uplink grant configured by the DU 2 for the terminal device, and when the first condition is met, requests, by using the second information, the DU 2 to activate the first uplink grant. In this way, when receiving the cell switch command from the DU 1, the terminal device sends the uplink data to the DU 2 based on the activated first uplink grant, to access the DU 2. The first time domain resource included in the first uplink grant is still in the first time period, so that a waste of resources can be reduced. In addition, before receiving the cell switch command from the DU 1, the terminal device has determined the first uplink grant that is configured by the DU 2 for the terminal device and that has been activated. In this way, when receiving the cell switch command from the DU 1, the terminal device may alternatively send the uplink data to the DU 2 directly based on the activated first uplink grant, to reduce a switch delay of the terminal device for switching to the DU 2.

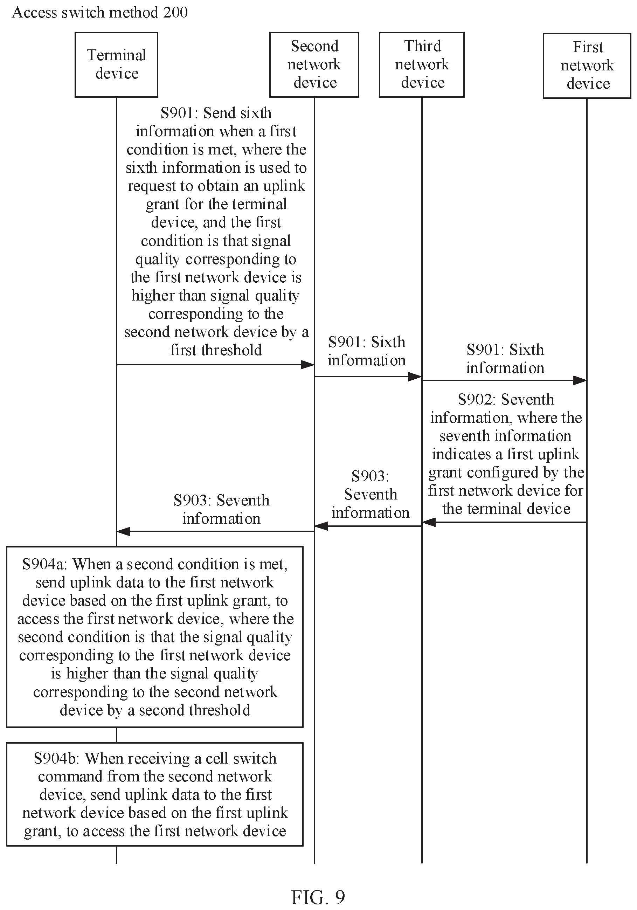

An embodiment of this application further provides an access switch method 200. FIG. 9 is an interaction diagram of the access switch method 200. The access switch method 200 is described from a perspective of interaction between a terminal device, a first network device, a second network device, and a third network device. The access switch method 200 includes but is not limited to the following steps.

S901: The terminal device sends sixth information when a first condition is met, where the sixth information is used to request to obtain an uplink grant for the terminal device, and the first condition is that signal quality corresponding to the first network device is higher than signal quality corresponding to the second network device by a first threshold. Correspondingly, the first network device receives the sixth information.

In this embodiment of this application, for the signal quality corresponding to the first network device and the signal quality corresponding to the second network device, refer to the descriptions in the access switch method 100. Details are not described again.

It may be understood that the terminal device sends the sixth information to the second network device when the first condition is met. The second network device sends the sixth information to the third network device. After receiving the sixth information from the second network device, the third network device determines, based on an ephemeris of each network device, that the terminal device is to switch to the first network device. In this way, the third network device sends the sixth information to the first network device, so that the first network device configures the uplink grant for the terminal device. Optionally, when sending an RRC reconfiguration message, the third network device determines a sequence in which the terminal device switches to a plurality of network devices, for example, determines a sequence in which the terminal device switches to a plurality of DUs. In other words, the third network device may determine, in advance, the sequence in which the terminal device switches to the plurality of network devices. In this way, when receiving the sixth information, the third network device sends the sixth information to the first network device to which the terminal device is to switch, so that the first network device configures the uplink grant for the terminal device.

When the first condition is that the signal quality corresponding to the first network device is higher than the signal quality corresponding to the second network device by the first threshold, the terminal device may switch to the first network device. In this way, the terminal device sends the sixth information, and requests, by using the sixth information, to obtain the uplink grant for the terminal device, so that the terminal device can subsequently switch to the first network device based on the obtained uplink grant.

Optionally, when the first condition is not met, the terminal device does not send the sixth information, and therefore does not perform steps after S901.

S902: The first network device sends seventh information to the third network device, where the seventh information indicates a first uplink grant configured by the first network device for the terminal device. Correspondingly, the third network device receives the seventh information from the first network device.

In an optional implementation, after obtaining the sixth information, the first network device configures the first uplink grant for the terminal device, and indicates, by using the seventh information, the first uplink grant configured by the first network device for the terminal device. In other words, after obtaining the sixth information, the first network device configures the first uplink grant for the terminal device in a configured grant (configured grant) manner.

In another optional implementation, the seventh information is a PDCCH, that is, the first uplink grant is carried in the PDCCH. In this manner, the first network device configures the first uplink grant for the terminal device in a dynamic grant (dynamic grant) manner.

Optionally, the sixth information is further used to request to obtain a receive beam of the first network device. Optionally, the sixth information is further used to request to obtain a transmit beam of the terminal device. When the sixth information is further used to request to obtain the receive beam of the first network device or the transmit beam of the terminal device, for implementations of the sixth information and the seventh information, refer to the implementations of the fifth information and the first information in S603. Details are not described again.

S903: The third network device sends the seventh information. Correspondingly, the terminal device receives the seventh information.

It may be understood that the third network device sends the seventh information to the second network device, and then the second network device sends the seventh information to the terminal device. In this way, the terminal device obtains the first uplink grant configured by the first network device for the terminal device.

S904a: When a second condition is met, the terminal device sends uplink data to the first network device based on the first uplink grant, to access the first network device, where the second condition is that the signal quality corresponding to the first network device is higher than the signal quality corresponding to the second network device by a second threshold.

The second threshold is greater than the first threshold. Optionally, for other implementations of the first condition and the second condition, refer to the descriptions in S605. Details are not described again.

When the signal quality corresponding to the first network device is higher than the signal quality corresponding to the second network device by the second threshold, it indicates that the terminal device needs to switch to the first network device. In this case, the terminal device sends the uplink data to the first network device based on the first uplink grant configured by the first network device for the terminal device, to access the first network device.

Optionally, when the second condition is not met, the terminal device does not perform the step of sending the uplink data to the first network device based on the first uplink grant.

S904b: When receiving a cell switch command from the second network device, the terminal device sends uplink data to the first network device based on the first uplink grant, to access the first network device.

It may be understood that the terminal device does not determine, based on the second condition, whether to switch to the first network device, but the terminal device determines, based on whether the cell switch command from the second network device is received, whether to switch to the first network device.

The second network device determines, based on an L1 measurement report reported by the terminal device, whether the terminal device needs to switch to the first network device. When determining that the terminal device needs to switch to the first network device, the second network device sends the cell switch command to the terminal device, so that the terminal device switches to the first network device. In this way, when receiving the cell switch command from the second network device, the terminal device sends the uplink data to the first network device based on the first uplink grant configured by the first network device for the terminal device, to access the first network device.

It may be understood that the terminal device performs S904a or S904b, to switch to the first network device.

Optionally, the third network device further sends the first threshold and the second threshold that correspond to the first network device, or sends the first threshold corresponding to the first network device. Correspondingly, the terminal device receives the first threshold and the second threshold that correspond to the first network device, or receives the first threshold corresponding to the first network device. Optionally, the first threshold and the second threshold that correspond to the first network device, or the first threshold corresponding to the first network device, are carried in the RRC reconfiguration information, to reduce signaling overheads.

In this embodiment of this application, when the first condition is met, the terminal device requests, by using the sixth information, to obtain the uplink grant for the terminal device, and obtains, by using the seventh information, the first uplink grant configured by the first network device for the terminal device. Further, when the second condition is met or when the terminal device receives the cell switch command from the second network device, the terminal device sends the uplink data to the first network device based on the first uplink grant, to access the first network device.

It can be learned that before the second condition is met or before the terminal device receives the cell switch command from the second network device, the terminal device obtains the first uplink grant configured by the first network device for the terminal device. In this case, when the second condition is met or when the terminal device receives the cell switch command from the second network device, the terminal device may directly send the uplink data to the first network device based on the first uplink grant, to reduce a switch delay of the terminal device for switching to the first network device.

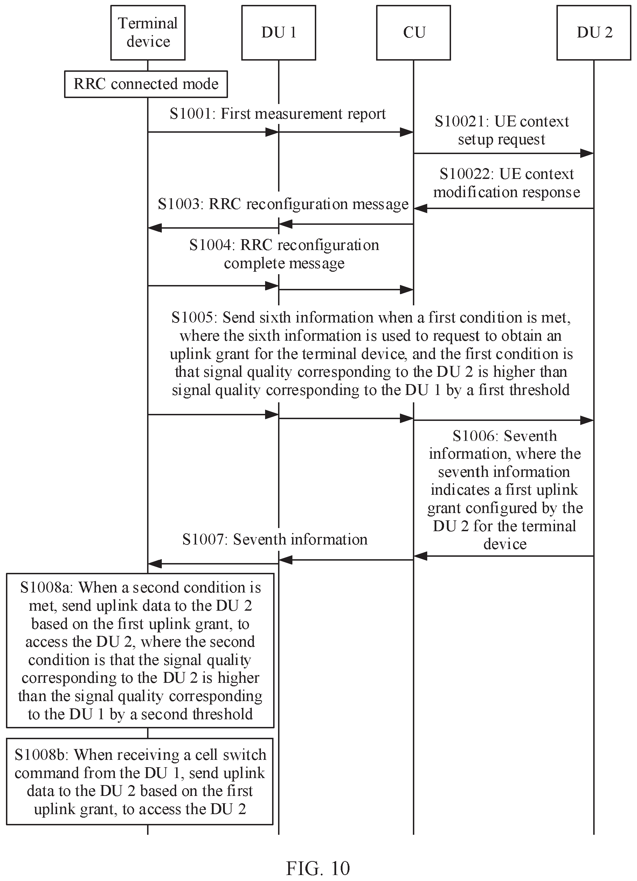

The following describes the access switch method 200 by using an example in which the first network device is a DU 2, the second network device is a DU 1, the third network device is a CU, the DU 1 is a DU deployed in a satellite that currently serves the terminal device, the DU 2 is a DU deployed in a target satellite to which the terminal device is to perform access switch, and the CU is a terrestrial base station. FIG. 10 shows an interaction procedure between the terminal device, the DU 1, the DU 2, and the CU. As shown in FIG. 10, the interaction procedure includes but is not limited to the following steps.

S1001: The terminal device sends a first measurement report. Correspondingly, the CU receives the first measurement report.

S10021: The CU sends a UE context setup request to the DU 2. Correspondingly, the DU 2 receives the UE context setup request from the CU.

S10022: The DU 2 sends a UE context modification response to the CU. Correspondingly, the CU receives the UE context modification response from the DU 2.

S1003: The CU sends an RRC reconfiguration message. Correspondingly, the terminal device receives the RRC reconfiguration message.

S1004: The terminal device sends an RRC reconfiguration complete message. Correspondingly, the CU receives the RRC reconfiguration complete message.

It may be understood that, for S1001 to S1004, refer to descriptions of related steps in FIG. 8A and FIG. 8B. Details are not described again.

S1005: The terminal device sends sixth information when a first condition is met, where the sixth information is used to request to obtain an uplink grant for the terminal device, and the first condition is that signal quality corresponding to the DU 2 is higher than signal quality corresponding to the DU 1 by a first threshold. Correspondingly, the DU 2 receives the sixth information.

When the signal quality corresponding to the DU 2 is higher than the signal quality corresponding to the DU 1 by the first threshold, it indicates that the terminal device may switch to the DU 2. In this case, when the first condition is met, the terminal device sends the sixth information, to request to obtain the uplink grant configured by the DU 2 for the terminal device.

It may be understood that when the first condition is met, the terminal device sends the sixth information to the DU 1, the DU 1 sends the sixth information to the CU, and the CU sends the sixth information to the DU 2. In this way, the DU 2 receives the sixth information.

Optionally, when the first condition is not met, the terminal device does not send the sixth information, and therefore does not perform steps after S1005.

S1006: The DU 2 sends seventh information to the CU, where the seventh information indicates a first uplink grant configured by the DU 2 for the terminal device. Correspondingly, the CU receives the seventh information from the DU 2.

It may be understood that after receiving the sixth information, the DU 2 configures the first uplink grant for the terminal device, and indicates, to the CU by using the seventh information, the first uplink grant configured by the DU 2 for the terminal device.

Optionally, the sixth information is further used to request to obtain a receive beam of the DU 2. Optionally, the sixth information is further used to request to obtain a transmit beam of the terminal device. When the sixth information is further used to request to obtain the receive beam of the DU 2 or the transmit beam of the terminal device, for implementations of the sixth information and the seventh information, refer to the implementations of the fifth information and the first information in S603. Details are not described again.

S1007: The CU sends the seventh information. Correspondingly, the terminal device receives the seventh information.

It may be understood that the CU sends the seventh information to the DU 1, and then the DU 1 sends the seventh information to the terminal device. In this way, the terminal device obtains, by using the seventh information, the first uplink grant configured by the DU 2 for the terminal device.

S1008a: When a second condition is met, the terminal device sends uplink data to the DU 2 based on the first uplink grant, to access the DU 2, where the second condition is that the signal quality corresponding to the DU 2 is higher than the signal quality corresponding to the DU 1 by a second threshold.

S1008b: When receiving a cell switch command from the DU 1, the terminal device sends uplink data to the DU 2 based on the first uplink grant, to access the DU 2.

It may be understood that the terminal device performs S1008a or S1008b, to switch to the DU 2.

Optionally, when the second condition is not met, the terminal device does not perform the step of sending the uplink data to the DU 2 based on the first uplink grant.

Optionally, when the terminal device receives no cell switch command from the DU 1, the terminal device does not perform the step of sending the uplink data to the DU 2 based on the first uplink grant.

Optionally, after the terminal device successfully accesses the DU 2, the DU 2 may notify, via access success signaling, the CU that the terminal device has successfully accessed the DU 2. For an implementation thereof, refer to the descriptions in the access switch method shown in FIG. 7. Details are not described again.

Optionally, after completing switch to the DU2, the terminal device may further perform consecutive LTM switch. For an implementation thereof, refer to the descriptions in the access switch method shown in FIG. 7. Details are not described again.

When the second condition is met, the terminal device sends the uplink data to the DU 2 based on the first uplink grant configured by the DU 2 for the terminal device, to access the DU 2; or when receiving the cell switch command from the DU 1, the terminal device sends the uplink data to the DU based on the first uplink grant configured by the DU 2 for the terminal device, to access the DU 2. In the two manners, before switching to the DU 2, the terminal device obtains the first uplink grant configured by the DU 2 for the terminal device. Therefore, when switching to the DU 2, the terminal device may directly send the uplink data to the DU 2 based on the obtained first uplink grant, to reduce a delay of the terminal device for switching to the DU 2.

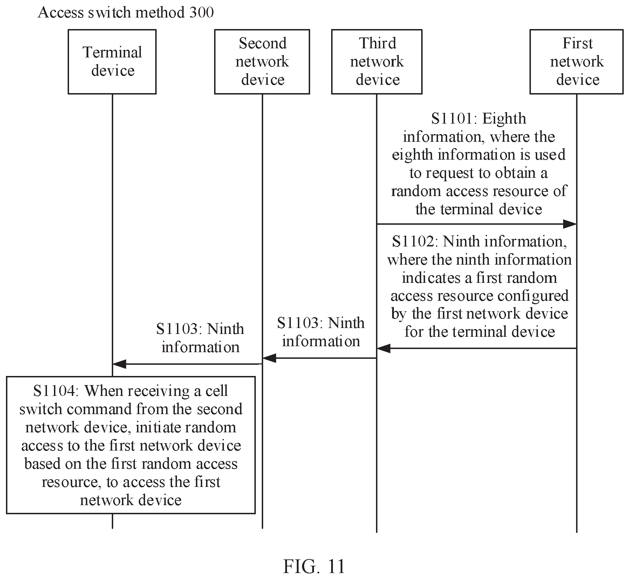

An embodiment of this application further provides an access switch method 300. FIG. 11 is a schematic flowchart of the access switch method 300. The access switch method 300 is described from perspectives of a terminal device, a first network device, and a third network device. The access switch method 200 includes but is not limited to the following steps.

S1101: The third network device sends eighth information to the first network device, where the eighth information is used to request to obtain a random access resource of the terminal device.

It may be understood that the third network device sends the eighth information to the first network device when determining, based on an ephemeris of the plurality of network devices and location information of the terminal device, that the terminal device is to switch to the first network device, to request the first network device to configure the random access resource for the terminal device.

S1102: The first network device sends ninth information to the third network device, where the ninth information indicates a first random access resource configured by the first network device for the terminal device.

After receiving the eighth information from the third network device, the first network device configures the first random access resource for the terminal device, and indicates the first random access resource to the third network device by using the ninth information.

S1103: The third network device sends the ninth information. Correspondingly, the terminal device receives the ninth information.

It may be understood that the third network device sends the ninth information to the second network device, and then the second network device sends the ninth information to the terminal device. In this way, the terminal device obtains, by using the ninth information, the first random access resource configured by the first network device for the terminal device.

S1104: When receiving a cell switch command from the second network device, the terminal device initiates random access to the first network device based on the first random access resource, to access the first network device.

It may be understood that the terminal device reports an L1 measurement report to the second network device, and the second network device determines, based on the L1 measurement report reported by the terminal device, whether the terminal device needs to switch to the first network device. When determining, based on the L1 measurement report reported by the terminal device, that the terminal device needs to switch to the first network device, the second network device sends the cell switch command to the terminal device, to indicate the terminal device to switch to the first network device. In this way, when receiving the cell switch command from the second network device, the terminal device initiates random access to the first network device based on the obtained first random access resource, to access the first network device.

In this embodiment of this application, the third network device requests, by using the eighth information, the first network device to configure the random access resource for the terminal device. In this way, before receiving the cell switch command from the second network device, the terminal device obtains the first random access resource configured by the first network device for the terminal device. Further, when receiving the cell switch command from the second network device, the terminal device may directly initiate random access to the first network device based on the obtained first random access resource, to reduce a switch delay of the terminal device for switching to the first network device.

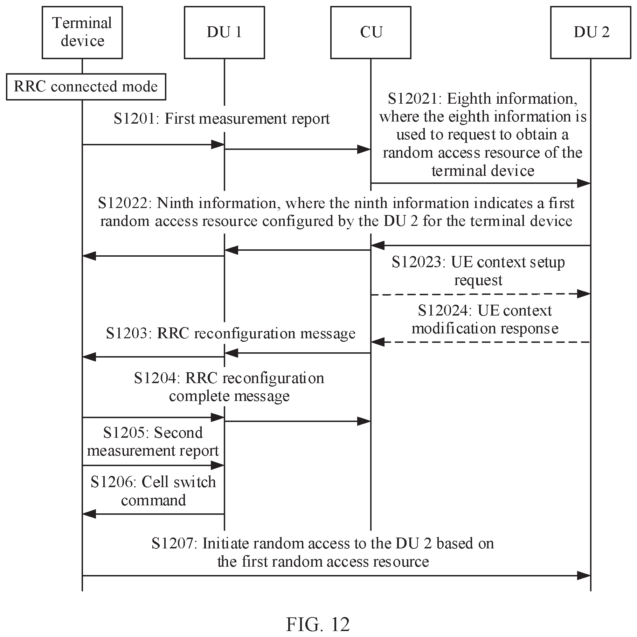

The following describes the access switch method 300 by using an example in which the first network device is a DU 2, the second network device is a DU 1, the third network device is a CU, the DU 1 is a DU deployed in a satellite that currently serves the terminal device, the DU 2 is a DU deployed in a target satellite to which the terminal device is to perform access switch, and the CU is a terrestrial base station. FIG. 12 shows an interaction procedure between the terminal device, the DU 1, the DU 2, and the CU. As shown in FIG. 12, the interaction procedure includes but is not limited to the following steps.

S1201: The terminal device sends a first measurement report. Correspondingly, the CU receives the first measurement report.

It may be understood that the terminal device performs measurement based on an L3 measurement configuration of the CU, to obtain the first measurement report. The terminal device sends the first measurement report to the DU 1, and then the DU 1 sends the first measurement report to the CU. Further, the CU receives the first measurement report.

S12021: The CU sends eighth information to the DU 2, where the eighth information is used to request to obtain a random access resource of the terminal device.

When determining that the terminal device is to switch to the DU 2, the CU sends the eighth information to the DU 2, to request the DU 2 to configure the random access resource for the terminal device, so that the terminal device can subsequently perform random access to the DU 2.

S12022: The DU 2 sends ninth information, where the ninth information indicates a first random access resource configured by the DU 2 for the terminal device. Correspondingly, the terminal device receives the ninth information.

After receiving the eighth information, the DU 2 configures the first random access resource for the terminal device, and delivers, by using the ninth information, the first random access resource configured for the terminal device.

It may be understood that the DU 2 sends the ninth information to the CU, the CU sends the ninth information to the DU 1, and the DU 1 sends the ninth information to the terminal device. In this way, the terminal device obtains, by using the ninth information, the first random access resource configured by the DU 2 for the terminal device.

Optionally, the CU may further perform S12023. To be specific, the CU sends a UE context setup request to the DU 2. Correspondingly, the DU 2 receives the UE context setup request from the CU. Optionally, the DU 2 may further perform S12024. To be specific, the DU 2 sends a UE context modification response to the CU. Correspondingly, the CU receives the UE context modification response from the DU 2.

Optionally, the eighth information is carried in the UE context setup request, and the ninth information sent by the DU 2 to the CU is carried in the UE context modification response. Optionally, the ninth information sent by the CU may be carried in an RRC reconfiguration message. This manner can reduce signaling overheads.

S1203: The CU sends the RRC reconfiguration message. Correspondingly, the terminal device receives the RRC reconfiguration message.

S1204: The terminal device sends an RRC reconfiguration complete message. Correspondingly, the CU receives the RRC reconfiguration complete message.

S1205: The terminal device sends a second measurement report to the DU 1. Correspondingly, the DU 1 receives the second measurement report from the terminal device.

S1206: The DU 1 sends a cell switch command to the terminal device. Correspondingly, the terminal device receives the cell switch command from the DU 1.

S1207: The terminal device initiates random access to the DU 2 based on the first random access resource.

The second measurement report is an L1 measurement report.

When determining, based on the second measurement report reported by the terminal device, that the terminal device needs to switch to the DU 2, the DU 1 sends the cell switch command to the terminal device, to indicate the terminal device to switch to the DU 2. In this way, when receiving the cell switch command from the DU 1, the terminal device initiates random access to the DU 2 based on the obtained first random access resource, in other words, performs random access to the DU 2.

In this embodiment of this application, for a manner in which the first network device activates the first random access resource and a manner in which the terminal device determines whether the first random access resource has been activated, respectively refer to the activation manner in which the first network device determines the first uplink grant and the manner in which the terminal device determines whether the first uplink grant has been activated that are in the access switch method 100. Details are not described again.

It can be learned that before receiving the cell switch command from the DU 1, the terminal device obtains the first random access resource configured by the DU 2 for the terminal device. Therefore, when receiving the cell switch command from the DU 1, the terminal device may directly initiate random access to the DU 2 by using the obtained first random access resource, to reduce a switch delay of the terminal device for switching to the DU 2.

For the technical solutions described above, the following further describes corresponding apparatus implementation solutions.

To implement functions in the methods provided in embodiments of this application, the terminal device and the network device (the first network device or the third network device) may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

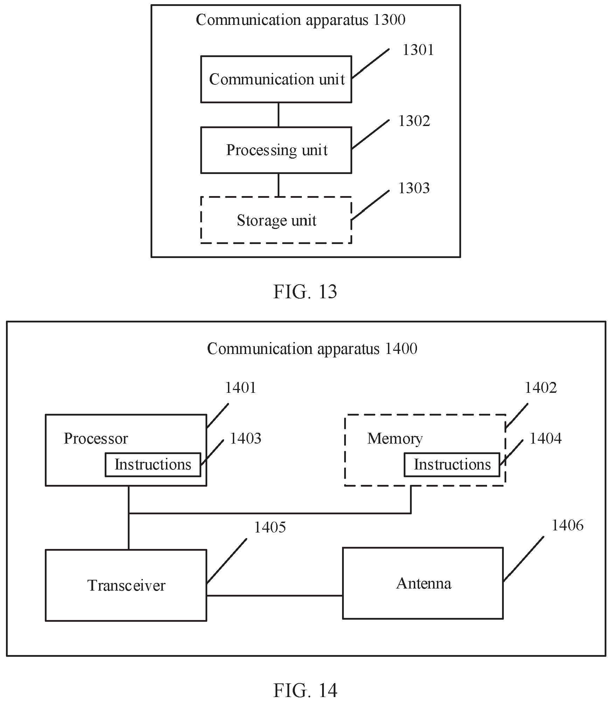

As shown in FIG. 13, an embodiment of this application provides a communication apparatus 1300. The communication apparatus 1300 may be a component (for example, an integrated circuit or a chip) of a terminal device, or may be a component (for example, an integrated circuit or a chip) of a network device (a first network device or a third network device). The communication apparatus 1300 may alternatively be another communication unit, configured to implement the methods in the method embodiments of this application. The communication apparatus 1300 may include a communication unit 1301 and a processing unit 1302. Optionally, the communication apparatus 1300 may further include a storage unit 1303.

In one possible design, one or more units in FIG. 13 may be implemented by one or more processors, or implemented by one or more processors and a memory, or implemented by one or more processors and a transceiver, or implemented by one or more processors, a memory, and a transceiver. This is not limited in embodiments of this application. The processor, the memory, and the transceiver may be disposed separately, or may be integrated.

The communication apparatus 1300 has a function of implementing the terminal device or a function of implementing the network device (the first network device or the third network device) described in embodiments of this application. For example, the communication apparatus 1300 includes a module, a unit, or a means (means) corresponding to the steps performed by the terminal device described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiments.

In a possible design, the communication apparatus 1300 may include a processing unit 1302 and a communication unit 1301.

The communication unit 1301 is configured to receive first information, where the first information indicates acknowledgment information that a first network device configures an uplink grant for a terminal device, and the first network device is a target network device to which the terminal device is to perform access switch.

The processing unit 1302 is configured to determine, based on the first information, a first uplink grant configured by the first network device for the terminal device, where the first uplink grant includes a first time domain resource, the first time domain resource is in a first time period, and the first time period is a time period in which the terminal device switches to the first network device.

The processing unit 1302 is further configured to switch to the first network device based on the first uplink grant.

In addition, for another optional implementation of the communication apparatus in this aspect, refer to the related content of the foregoing method embodiment. Details are not described herein again.

This embodiment of this application and the foregoing method embodiment are based on a same concept, and bring same technical effect. For a specific principle, refer to the descriptions of the foregoing embodiment. Details are not described again.

In another possible design, the communication apparatus 1300 may include a processing unit 1302 and a communication unit 1301. The processing unit 1302 is configured to process a signal/signaling.

The communication unit 1301 is configured to send fifth information to a first network device, where the fifth information is used to request the first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch.

The communication unit 1301 is further configured to: receive first information from the first network device, and send the first information, where the first information indicates acknowledgment information that the first network device configures the uplink grant for the terminal device.

In addition, for another optional implementation of the communication apparatus in this aspect, refer to the related content of the method embodiment. Details are not described herein again.

This embodiment of this application and the foregoing method embodiment are based on a same concept, and bring same technical effect. For a specific principle, refer to the descriptions of the foregoing embodiment. Details are not described again.

In another possible design, the communication apparatus 1300 may include a processing unit 1302 and a communication unit 1301.

The communication unit 1301 is configured to receive fifth information from a third network device, where the fifth information is used to request a first network device to configure an uplink grant for a terminal device, the fifth information includes information indicating a first time period, a time domain resource in the uplink grant is in the first time period, the first time period is a time period in which the terminal device switches to the first network device, and the first network device is a target network device to which the terminal device is to perform access switch.

The communication unit 1301 is further configured to send first information to the third network device, where the first information indicates acknowledgment information that the first network device configures the uplink grant for the terminal device.

The processing unit 1302 is configured to receive uplink data from the terminal device based on a first uplink grant configured for the terminal device, where the first uplink grant includes a first time domain resource, and the first time domain resource is in the first time period.

In addition, for another optional implementation of the communication apparatus in this aspect, refer to the related content of the foregoing method embodiment. Details are not described herein again.

This embodiment of this application and the foregoing method embodiment are based on a same concept, and bring same technical effect. For a specific principle, refer to the descriptions of the foregoing embodiment. Details are not described again.

In another possible design, the communication apparatus 1300 may include a processing unit 1302 and a communication unit 1301. The processing unit 1302 is configured to process a signal/signaling.

The communication unit 1301 is configured to send sixth information when a first condition is met, where the sixth information is used to request to obtain an uplink grant for a terminal device, the first condition is that signal quality corresponding to a first network device is higher than signal quality corresponding to a second network device by a first threshold, the first network device is a target network device to which the terminal device is to perform access switch, and the second network device is a network device that currently serves the terminal device.

The communication unit 1301 is further configured to receive seventh information, where the seventh information indicates a first uplink grant configured by the first network device for the terminal device.

The communication unit 1301 is further configured to: When a second condition is met, send uplink data to the first network device based on the first uplink grant, to access the first network device, where the second condition is that the signal quality corresponding to the first network device is higher than the signal quality corresponding to the second network device by a second threshold, and the second threshold is greater than the first threshold; or when receiving a cell switch command from the second network device, send uplink data to the first network device based on the first uplink grant, to access the first network device.

In addition, for another optional implementation of the communication apparatus in this aspect, refer to the related content of the foregoing method embodiment. Details are not described herein again.

In another possible design, the communication apparatus 1300 may include a processing unit 1302 and a communication unit 1301. The processing unit 1302 is configured to process a signal/signaling.

The communication unit 1301 is configured to: receive sixth information, and send the sixth information to a first network device, where the sixth information is used to request to obtain an uplink grant for a terminal device, the sixth information is sent by the terminal device when a first condition is met, the first condition is that signal quality corresponding to a first network device is higher than signal quality corresponding to a second network device by a first threshold, the first network device is a target network device to which the terminal device is to perform access switch, and the second network device is a network device that currently serves the terminal device.

The communication unit 1301 is further configured to: receive seventh information from the first network device, and send the seventh information, where the seventh information indicates a first uplink grant configured by the first network device for the terminal device.

In addition, for another optional implementation of the communication apparatus in this aspect, refer to the related content of the foregoing method embodiment. Details are not described herein again.

In another possible design, the communication apparatus 1300 may include a processing unit 1302 and a communication unit 1301.

The communication unit 1301 is configured to receive sixth information from a third network device, where the sixth information is used to request to obtain an uplink grant for a terminal device, the sixth information is sent by the terminal device to the third network device when a first condition is met, the first condition is that signal quality corresponding to a first network device is higher than signal quality corresponding to a second network device by a first threshold, the first network device is a target network device to which the terminal device is to perform access switch, and the second network device is a network device that currently serves the terminal device.

The communication unit 1301 is further configured to send seventh information to the third network device, where the seventh information indicates a first uplink grant configured by the first network device for the terminal device.

The processing unit 1302 is configured to receive uplink data from the terminal device based on the first uplink grant.

In addition, for another optional implementation of the communication apparatus in this aspect, refer to the related content of the foregoing method embodiment. Details are not described herein again.

This embodiment of this application and the foregoing method embodiment are based on a same concept, and bring same technical effect. For a specific principle, refer to the descriptions of the foregoing embodiment. Details are not described again.

An embodiment of this application further provides a communication apparatus 1400. FIG. 14 is a diagram of a structure of the communication apparatus 1400. The communication apparatus 1400 may be a terminal device, or may be a chip, a chip system, a processor, or the like that supports the terminal device in implementing the foregoing methods; or may be a network device (a first network device or a third network device), or may be a chip, a chip system, a processor, or the like that supports the network device (the first network device or the third network device) in implementing the foregoing methods. The apparatus may be configured to implement the methods described in the foregoing method embodiments. For details, refer to the descriptions in the foregoing method embodiments.

The communication apparatus 1400 includes one or more processors 1401. The processor 1401 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control the communication apparatus (for example, a base station, a baseband chip, a terminal, a terminal chip, a distributed unit DU, or a central unit CU), execute a software program, and process data of the software program.

Optionally, the communication apparatus 1400 may include one or more memories 1402. The memory may store instructions 1404. The instructions may be run on the processor 1401, so that the communication apparatus 1400 performs the methods described in the foregoing method embodiments. Optionally, the memory 1402 may further store data. The processor 1401 and the memory 1402 may be separately disposed, or may be integrated together.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

When the communication apparatus 1400 is a terminal device, the processor 1401 is configured to perform S604 and S605 in the access switch method 100, and perform S1104 in the access switch method 300; and the transceiver 1405 is configured to perform S603 in the access switch method 100, perform S901, S903, and S904a or S904b in the access switch method 200, and perform S1103 in the access switch method 300.

When the communication apparatus 1400 is a first network device, the transceiver 1405 is configured to perform S601 and S602 in the access switch method 100, perform S901 and S902 in the access switch method 100, and perform S1101 and S1102 in the access switch method 300.

When the communication apparatus 1400 is a third network device, the transceiver 1405 is configured to perform S601 and S602 in the access switch method 100, perform S901 and S903 in the access switch method 200, and perform S1101 and S1102 in the access switch method 300.

Optionally, the processor 1401 may store instructions 1403. The instruction 1403 are run on the processor 1401, so that the communication apparatus 1400 performs the methods described in the foregoing method embodiments. The instructions 1403 may be built into the processor 1401. In this case, the processor 1401 may be implemented by using hardware.

This embodiment of this application and the method embodiments shown in the access switch method 100 to the access switch method 300 are based on a same concept, and bring same technical effect. For a specific principle, refer to the descriptions of the embodiments shown in the access switch method 100 to the access switch method 300. Details are not described again.

An embodiment of this application further provides a computer-readable storage medium, configured to store computer software instructions. When the instructions are executed by a communication apparatus, a function in any one of the foregoing method embodiments is implemented.

An embodiment of this application further provides a computer program product, configured to store computer software instructions. When the instructions are executed by a communication apparatus, a function in any one of the foregoing method embodiments is implemented.

An embodiment of this application further provides a computer program. When the computer program is run on a computer, a function in any one of the foregoing method embodiments is implemented.

An embodiment of this application further provides a communication system. The system includes a terminal device, a first network device, a second network device, and a third network device. In another possible design, the system may further include another device that interacts with the terminal device, the first network device, the second network device, and the third network device.

The terms "first", "second", and the like in the specification, claims, and accompanying drawings of embodiments of this application are used to distinguish between different objects, but are not used to describe a specific order. "First", "second", and the like are merely intended for a purpose of description, and shall not be understood as an indication or implication of relative importance or an implicit indication of a quantity of indicated technical features. Therefore, a feature limited by "first", "second", or the like may explicitly or implicitly include one or more features. In descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes unlisted steps or units, or optionally further includes other inherent steps or units of the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In embodiments of this application, "at least one (item)" means one or more, "a plurality of' means two or more, and "and/or" is used to describe an association between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

In embodiments of this application, the word "example" or "for example" is used to represent giving an example, an illustration, or a description. Any embodiment or design scheme described as an "example" or "for example" in embodiments of this application shall not be explained as being more preferred or having more advantages than another embodiment or design scheme. To be precise, use of the term "example", "for example", or the like is intended to present a related concept in a specific manner for ease of understanding.

All or some of the foregoing embodiments may be implemented by using software, hardware, firmware, or any combination thereof. When software is used for implementation, all or some of embodiments may be implemented in a form of computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An access switch method, wherein the method is applied to a terminal device, and the method comprises:
receiving first information, wherein the first information indicates acknowledgment information that a first network device configures an uplink grant for the terminal device, and the first network device is a target network device to which the terminal device is to perform access switch;
determining, based on the first information, a first uplink grant configured by the first network device for the terminal device, wherein the first uplink grant comprises a first time domain resource, the first time domain resource is in a first time period, and the first time period is a time period in which the terminal device switches to the first network device; and
switching to the first network device based on the first uplink grant.

2. The method according to claim 1, wherein switching to the first network device based on the first uplink grant comprises:
receiving a cell switch command from a second network device; and
sending uplink data to the first network device based on the first uplink grant, to access the first network device, wherein the second network device is a network device that currently serves the terminal device.

3. The method according to claim 2, wherein before switching to the first network device based on the first uplink grant, the method further comprises:
receiving a first indication, wherein the first indication indicates that the first network device has activated the first uplink grant.

4. The method according to claim 1, wherein switching to the first network device based on the first uplink grant comprises:
sending second information when a first condition is met, wherein the second information is used to request to activate the first uplink grant, the first condition is that signal quality corresponding to the first network device is higher than signal quality corresponding to a second network device by a first threshold, and the second network device is a network device that currently serves the terminal device;
receiving third information, wherein the third information indicates that the first network device has activated the first uplink grant; and
when a second condition is met, sending uplink data to the first network device based on the first uplink grant, to access the first network device, wherein the second condition is that the signal quality corresponding to the first network device is higher than the signal quality corresponding to the second network device by a second threshold, and the second threshold is greater than the first threshold; or
when receiving a cell switch command from the second network device, sending uplink data to the first network device based on the first uplink grant, to access the first network device.

5. The method according to claim 4, wherein the method further comprises:
receiving the first threshold and the second threshold that correspond to the first network device, wherein the second threshold is greater than the first threshold; or
receiving the first threshold corresponding to the first network device.

6. The method according to any one of claims 1 to 5, wherein the first information further indicates the first uplink grant.

7. The method according to any one of claims 1 to 5, wherein determining the first uplink grant configured by the first network device for the terminal device comprises:
receiving fourth information, wherein the fourth information indicates the first uplink grant; and
determining, based on the fourth information, the first uplink grant configured by the first network device for the terminal device.

8. The method according to any one of claims 1 to 7, wherein a start moment of the first time period is a moment at which the terminal device sends a measurement report to the second network device, and an end moment of the first time period is a moment at which the terminal device accesses the first network device.

9. An access switch method, wherein the method is applied to a third network device, and the method comprises:
sending fifth information to a first network device, wherein the fifth information is used to request the first network device to configure an uplink grant for a terminal device, the fifth information comprises information indicating a first time period, a time domain resource in the uplink grant is in the first time period, the first time period is a time period in which the terminal device switches to the first network device, and the first network device is a target network device to which the terminal device is to perform access switch; and
receiving first information from the first network device, and sending the first information, wherein the first information indicates acknowledgment information that the first network device configures the uplink grant for the terminal device.

10. The method according to claim 9, wherein the first information further indicates a first uplink grant configured by the first network device for the terminal device.

11. The method according to claim 9 or 10, wherein after receiving the first information from the first network device, and sending the first information, the method further comprises:
receiving second information, and sending the second information to the first network device, wherein the second information is used to request to activate the first uplink grant configured by the first network device for the terminal device; and
receiving third information from the first network device, and sending the third information, wherein the third information indicates that the first network device has activated the first uplink grant.

12. The method according to claim 11, wherein the method further comprises:
sending a first threshold and a second threshold that correspond to the first network device, wherein the second threshold is greater than the first threshold; or
sending a first threshold corresponding to the first network device.

13. The method according to any one of claims 9 to 12, wherein a start moment of the first time period is a moment at which the terminal device sends a measurement report to a second network device, and an end moment of the first time period is a moment at which the terminal device accesses the first network device.

14. An access switch method, wherein the method is applied to a first network device, and the method comprises:
receiving fifth information from a third network device, wherein the fifth information is used to request the first network device to configure an uplink grant for a terminal device, the fifth information comprises information indicating a first time period, a time domain resource in the uplink grant is in the first time period, the first time period is a time period in which the terminal device switches to the first network device, and the first network device is a target network device to which the terminal device is to perform access switch;
sending first information to the third network device, wherein the first information indicates acknowledgment information that the first network device configures the uplink grant for the terminal device; and
receiving uplink data from the terminal device based on a first uplink grant configured for the terminal device, wherein the first uplink grant comprises a first time domain resource, and the first time domain resource is in the first time period.

15. The method according to claim 14, wherein the first information further indicates the first uplink grant.

16. The method according to claim 14, wherein before receiving the uplink data from the terminal device based on the first uplink grant configured for the terminal device, the method further comprises:
sending fourth information at a first moment, wherein the fourth information indicates the first uplink grant, and
the first moment is later than or equal to a start moment of the first time period.

17. The method according to any one of claims 14 to 16, wherein before receiving the uplink data from the terminal device based on the first uplink grant configured for the terminal device, the method further comprises:
sending a first indication when a third condition is met, wherein the first indication indicates that the first network device has activated the first uplink grant, and
the third condition is that current time is in the first time period; or the third condition is that a distance between the terminal device and the first network device is less than or equal to a first preset value, and/or a distance between the terminal device and a second network device is greater than a second preset value, wherein the second network device is a network device that currently serves the terminal device.

18. The method according to any one of claims 14 to 16, wherein before receiving the uplink data from the terminal device based on the first uplink grant configured for the terminal device, the method further comprises:
receiving second information from the third network device, wherein the second information is used to request to activate the first uplink grant; and
sending third information to the third network device, wherein the third information indicates that the first network device has activated the first uplink grant.

19. The method according to any one of claims 14 to 18, wherein the start moment of the first time period is a moment at which the terminal device sends a measurement report to the second network device, and an end moment of the first time period is a moment at which the terminal device accesses the first network device, wherein the second network device is a network device that currently serves the terminal device.

20. An access switch method, wherein the method is applied to a terminal device, and the method comprises:
sending sixth information when a first condition is met, wherein the sixth information is used to request to obtain an uplink grant for the terminal device, the first condition is that signal quality corresponding to a first network device is higher than signal quality corresponding to a second network device by a first threshold, the first network device is a target network device to which the terminal device is to perform access switch, and the second network device is a network device that currently serves the terminal device;
receiving seventh information, wherein the seventh information indicates a first uplink grant configured by the first network device for the terminal device; and
when a second condition is met, sending uplink data to the first network device based on the first uplink grant, to access the first network device, wherein the second condition is that the signal quality corresponding to the first network device is higher than the signal quality corresponding to the second network device by a second threshold, and the second threshold is greater than the first threshold; or
when receiving a cell switch command from the second network device, sending uplink data to the first network device based on the first uplink grant, to access the first network device.

21. The method according to claim 20, wherein before sending the uplink data to the first network device based on the first uplink grant, the method further comprises:
receiving a first indication, wherein the first indication indicates that the first network device has activated the first uplink grant.

22. The method according to claim 20 or 21, wherein the method further comprises:
receiving the first threshold and the second threshold that correspond to the first network device; or
receiving the first threshold corresponding to the first network device.

23. An access switch method, wherein the method is applied to a third network device, and the method comprises:
receiving sixth information, and sending the sixth information to a first network device, wherein the sixth information is used to request to obtain an uplink grant for a terminal device, the sixth information is sent by the terminal device when a first condition is met, the first condition is that signal quality corresponding to the first network device is higher than signal quality corresponding to a second network device by a first threshold, the first network device is a target network device to which the terminal device is to perform access switch, and the second network device is a network device that currently serves the terminal device; and
receiving seventh information from the first network device, and sending the seventh information, wherein the seventh information indicates a first uplink grant configured by the first network device for the terminal device.

24. The method according to claim 23, wherein the method further comprises:
sending the first threshold corresponding to the first network device.

25. An access switch method, wherein the method is applied to a first network device, and the method comprises:
receiving sixth information from a third network device, wherein the sixth information is used to request to obtain an uplink grant for the terminal device, the sixth information is sent by the terminal device to the third network device when a first condition is met, the first condition is that signal quality corresponding to the first network device is higher than signal quality corresponding to a second network device by a first threshold, the first network device is a target network device to which the terminal device is to perform access switch, and the second network device is a network device that currently serves the terminal device;
sending seventh information to the third network device, wherein the seventh information indicates a first uplink grant configured by the first network device for the terminal device; and
receiving uplink data from the terminal device based on the first uplink grant.

26. The method according to claim 25, wherein before receiving the uplink data from the terminal device based on the first uplink grant, the method further comprises:
sending a first indication when a third condition is met, wherein the first indication indicates that the first network device has activated the first uplink grant, and the third condition is that a distance between the terminal device and the first network device is less than or equal to a first preset value, and/or a distance between the terminal device and the second network device is greater than a second preset value.

27. A communication apparatus, wherein the communication apparatus comprises a module configured to perform the method according to any one of claims 1 to 8, or comprises a module configured to perform the method according to any one of claims 9 to 13, or comprises a module configured to perform the method according to any one of claims 14 to 19, or comprises a module configured to perform the method according to any one of claims 20 to 22, or comprises a module configured to perform the method according to claim 23 or 24, or comprises a module configured to perform the method according to claim 25 or 26.

28. A communication apparatus, wherein the communication apparatus comprises a processor, and the processor is configured to perform the method according to any one of claims 1 to 8, or configured to perform the method according to any one of claims 9 to 13, or configured to perform the method according to any one of claims 14 to 19, or configured to perform the method according to any one of claims 20 to 22, or configured to perform the method according to claim 23 or 24, or configured to perform the method according to claim 25 or 26.

29. A computer-readable storage medium, wherein the computer-readable storage medium is configured to store instructions, and when the instructions are run on a computer, the method according to any one of claims 1 to 8, the method according to any one of claims 9 to 13, the method according to any one of claims 14 to 19, the method according to any one of claims 20 to 22, the method according to claim 23 or 24, or the method according to claim 25 or 26 is performed.

30. A computer program product comprising instructions, wherein when the computer program product runs on a computer, the method according to any one of claims 1 to 8, the method according to any one of claims 9 to 13, the method according to any one of claims 14 to 19, the method according to any one of claims 20 to 22, the method according to claim 23 or 24, or the method according to claim 25 or 26 is performed.
